# EUROPÄISCHE PATENTSCHRIFT

(11) **EP 4 078 262 B1**
(45) Veröffentlichungstag und Bekanntmachung des Hinweises auf die Patenterteilung: **06.11.2024**
(21) Anmeldenummer: 20830119.2
(22) Anmeldetag: 14.12.2020
(51) Int. Cl.: G02B 21/00, G01N 21/64, G02B 27/58

(54) **VERFAHREN ZUR STÖRUNGSKORREKTUR UND LASERSCANNINGMIKROSKOP MIT STÖRUNGSKORREKTUR**
METHOD OF DISTURBANCE CORRECTION, AND LASER SCANNING MICROSCOPE HAVING DISTURBANCE CORRECTION
PROCÉDÉ DE CORRECTION DE PERTURBATION ET MICROSCOPE À BALAYAGE LASER À CORRECTION DE PERTURBATION

(30) Priorität: 21.12.2019 DE 102019008989
(43) Veröffentlichungstag der Anmeldung: 26.10.2022
(73) Patentinhaber: Abberior Instruments GmbH, 37077 Göttingen (DE)
(72) Erfinder: HARKE, Benjamin, 37083 Göttingen (DE); SCHMIDT, Roman, 37077 Göttingen (DE); KASTRUP, Lars, 37073 Göttingen (DE)
(86) Internationale Anmeldenummer: PCT/EP2020/085893
(87) Internationale Veröffentlichungsnummer: WO 2021/122407

(56) Entgegenhaltungen:
- EP-A1- 1 258 767
- EP-A2- 2 538 262
- WO-A1-2004/034124
- WO-A1-2015/097000
- DE-A1- 102010 017 630
- DE-A1- 102010 036 709
- DE-A1- 102017 115 367
- FRANCISCO BALZAROTTI ET AL: "Supplementary Materials for Nanometer resolution imaging and tracking of fluorescent molecules with minimal photon fluxes", SCIENCE, vol. 355, no. 6325, 22 December 2016 (2016-12-22), US, pages 606 - 612, XP055767212, ISSN: 0036-8075, DOI: 10.1126/science.aak9913

## Beschreibung

### Technisches Gebiet der Erfindung

Bei der mikroskopischen Abbildung von Objekten stellt sich die Aufgabe, die relative Lage zwischen dem Abbildungssystem und dem abzubildenden Objekt für die Dauer der Bildaufnahme konstant und stabil zu halten. Die Anforderungen an die Lagestabilisierung hängt dabei von der zu erzielenden räumlichen Auflösung bei der Abbildung des Objekts ab.

Mit der Entwicklung hochauflösender Methoden in der Fluoreszenzmikroskopie, speziell der STED-Mikroskopie, der PALM/STORM-Mikroskopie und zuletzt der MINFLUX-Mikroskopie, hat das Auflösungsvermögen optischer Abbildungsverfahren von beugungsbegrenzter Auflösung (ca. 250 nm) bis in den Bereich weniger Nanometer zugenommen. Um das Auflösungsvermögen dieser Methoden tatsächlich realisieren zu können, ist jedoch die relative Lage zwischen der Probe, der Optik und den Lichtstrahlen entsprechend auf wenige Nanometer stabil zu halten. Entsprechende Anforderungen sind bislang vor allem aus den Bereichen der Elektronen- und Rasterkraftmikroskopie sowie der Interferometrie bekannt.

Wesentliche Störfaktoren bei der Bildgebung mittels hochauflösender Lichtmikroskopie stellen insbesondere Temperaturfluktuationen, über das Gebäude und den Fußboden auf das Bildgebungssystem übertragene Vibrationen, durch Lüftungsanlagen verursachte Luftströmungen sowie Schallquellen dar.

Um den Einfluss von durch das Gebäude übertragenen Vibrationen zu minimieren wird daher meist ein diesbezüglich günstiger Aufstellort, beispielsweise in Kellerräumen, gewählt, und es werden passiv und/oder aktiv gedämpfte Tischsysteme eingesetzt. Temperaturschwankungen werden durch den Einsatz hochwertiger Regelungs- und Klimatechnik auf ein Minimum reduziert, und mit geeigneter Luftführung können auch Luftströmungen im Bereich des Bildaufnahmesystems stark reduziert werden.

Langsame Drifts der Probe gegenüber dem Mikroskopobjektiv infolge von thermischer Ausdehnung der Mikroskopkomponenten können geräteseitig auch mit geeigneten mechanischen Designs und durch die Auswahl von Materialien mit kleinen Wärmeausdehnungskoeffizienten reduziert werden.

Die Minimierung von Störeinflüssen und die genannten konstruktiven Maßnahmen reichen jedoch oft nicht aus, die durch die hochauflösenden Methoden gestellten Anforderungen an die Stabilität im Bereich von wenigen Nanometern zu erfüllen.

### Stand der Technik

Die Druckschrift WO 2015/097000 A1 beschreibt ein inzwischen unter dem Akronym MINFLUX bekanntes Verfahren zur Lokalisierung räumlich isolierter, fluoreszenter Moleküle, bei dem jedes der einzelnen Moleküle mit einer ein Intensitätsminimum aufweisenden Intensitätsverteilung von Anregungslicht an verschiedenen Positionen beleuchtet wird. Für jede der Beleuchtungspositionen wird die durch das Anregungslicht angeregte Fluoreszenzemission registriert, und es wird aus dem Verlauf der Intensität des Fluoreszenzlichts entlang der Positionen des Intensitätsminimums auf den Ort des jeweiligen Moleküls geschlossen. Naturgemäß ist diese Ortsbestimmung fehlerbehaftet, wobei der Fehler der Ortsbestimmung jedoch dadurch verringert werden kann, dass das Verfahren iterativ angewendet wird. Hierzu werden vor jedem Iterationsschritt die Beleuchtungspositionen angepasst, d. h. näher um den jeweils angenommenen Ort des Moleküls angeordnet. Gleichzeitig wird die Stärke des Anregungslichts erhöht, so dass der Intensitätsgradient in der Nähe des Intensitätsminimums zunimmt. Alternativ kann die Messdauer erhöht werden, was bezüglich der Menge des wirksamen Lichts einer Erhöhung der Stärke des Anregungslichts entspricht. Mit den angepassten Parametern wird das Molekül nacheinander an jeder der angepassten Beleuchtungspositionen beleuchtet und die Intensität der Fluoreszenzemission registriert. Aus der Abhängigkeit des Fluoreszenzsignals von den Positionen des Intensitätsminimums kann nun der Ort des Moleküls mit geringerem Fehler als zuvor bestimmt werden. Diese Verfahrensschritte können bis zur Konvergenz der Ortsbestimmung oder bis zum Erreichen eines anderen Abbruchkriteriums, beispielsweise eines vorher festgelegten maximal akzeptablen Fehlers, wiederholt werden. Mit einer erreichbaren Lokalisierungsgenauigkeit von ca. 1 nm stellt das MINFLUX-Verfahren nach dem aktuellen Stand der Technik die präziseste kommerziell erhältliche Lokalisierungsmethode für fluoreszierende Moleküle dar.

Die Druckschrift WO 2015/097000 A1 offenbart weiter, dass aus den Ortsdaten der einzelnen Moleküle ein (hochaufgelöstes) Abbild der Verteilung der Moleküle in der Probe gewonnen werden kann ("MINFLUX Imaging"). Dieses Verfahren entspricht den aus der STORM- und PALM-Mikroskopie allgemein bekannten Vorgehen zur Erzeugung hochaufgelöster Bilder aus einer Vielzahl von Ortsbestimmungen einzelner fluoreszenter Moleküle, resultiert im Falle der MINFLUX-Mikroskopie allerdings in einer nochmals gesteigerten räumlichen Auflösung der Bilder von 5 nm.

In der DE 10 2017 104 736 B3 ist eine Variante des MINFLUX-Verfahrens beschrieben, bei der das Abtasten der vereinzelt vorliegenden Fluoreszenzfarbstoffmoleküle nicht durch Beleuchten mit einer ein lokales Intensitätsminimum aufweisenden Intensitätsverteilung von Anregungslicht, sondern mit zwei im Wesentlichen komplementären Intensitätsverteilungen eines Anregungs- und eines Fluoreszenzverhinderungslichts erfolgt. Dabei weist die Intensitätsverteilung des Anregungslichts ein lokales Intensitätsmaximum auf, während die Intensitätsverteilung des Fluoreszenzverhinderungslichts an derselben Stelle ein lokales Intensitätsminimum aufweist. Bei dem Fluoreszenzverhinderungslicht kann es sich konkret um STED-Licht handeln, das in den Randbereichen der Intensitätsverteilung des Anregungslichts angeregte Fluoreszenzfarbstoffmoleküle durch Auslösen stimulierter Emission an der Aussendung von Fluoreszenzphotonen hindert. Bei dieser Ausführungsform des Verfahrens werden also das Anregungslicht und das Fluoreszenzverhinderungslicht mit solchen Intensitätsverteilungen überlagert, wie dies auch bei der RESOLFT- und der STED-Mikroskopie geschieht. Bei dieser Variante des MINFLUX-Verfahrens wird ausgenutzt, dass die Intensität des Fluoreszenzlichts, die für das jeweilige Fluoreszenzfarbstoffmolekül registriert wird, von dessen Abstand zu dem lokalen Intensitätsminimum des Fluoreszenzverhinderungslichts abhängt, und dass dessen Position mit hoher Genauigkeit aus den für mehrere Positionen des Intensitätsminimums des Fluoreszenzverhinderungslichts registrierten Intensitäten des Fluoreszenzlichts bestimmt werden kann. Auch bei dieser Variante des MINFLUX-Verfahrens kann das lokale Intensitätsminimum an wenigen Positionen in der Probe positioniert werden und die Auswertung der Intensitäten des registrierten Fluoreszenzlichts nach denselben Prinzipien erfolgen wie bei der MINFLUX-Mikroskopie. Als Unterschied verbleibt jedoch, dass bei der MINFLUX-Mikroskopie die Intensität des Fluoreszenzlichts von dem Fluoreszenzmarker mit zunehmendem Abstand seiner Position zu der Position des lokalen Intensitätsminimums zunimmt, während sie bei der Ausführungsform des Verfahrens, bei dem das weitere Licht Fluoreszenzverhinderungslicht ist, mit zunehmendem Abstand abnimmt.

Aus der STORM- und der PALM-Mikroskopie ist das Problem bekannt, dass sich die abzubildende Probe während der Datenaufnahme relativ zum Mikroskopsystem bewegt, was die Lokalisationsgenauigkeit kompromittiert. Bei der Bildrekonstruktion führt dies zu einer Bewegungsunschärfe und zu verwaschen wirkenden Bildern. Entsprechend der erhöhten Lokalisierungsgenauigkeit gilt diese Problematik bei der Lokalisierung von Molekülen nach dem MINFLUX-Verfahren in verstärktem Maße. Akzeptable Relativbewegungen zwischen der Probe und dem Mikroskopsystem liegen hier im Bereich von 1 nm oder darunter.

Aus dem Stand der Technik, insbesondere zur STORM- und PALM-Mikroskopie, sind verschiedene Ansätze zur Probenstabilisierung bekannt, wobei entweder eine Nachregelung der Probenposition während der Dauer des Datenaufnahme oder eine nachträgliche Korrektur der Bilddaten vorgeschlagen wird.

Aus der DE 199 59 228 A1 ist ein Laserscanningmikroskop mit einem Temperatursensor bekannt, bei dem die Fokuslage um einen aus einer Kalibrationskurve für die jeweils aktuelle Temperatur ermittelten Korrekturwert nachgeführt wird. Dieses Verfahren ist allerdings auf die Korrektur von thermischen Drifts in axialer Richtung, d.h. der Fokussierung, beschränkt.

In der EP 1 548 485 A1 wird ein Verfahren und ein dieses Verfahren ausführendes Mikroskop vorgeschlagen, bei dem Bilder eines vorzugsweise unbeweglichen Objekts zu unterschiedlichen Zeitpunkten aufgenommen werden, wobei zur Berechnung der Drift zwischen den Bildaufnahmen ein Bewegungsschätzer verwendet wird, bei dem die Drifterkennung über den Vergleich von korrespondierenden Blöcken (und ggf. Unterblöcken) der Bilder erfolgt. Die für die Blöcke einzeln ermittelten Drifts können anschließend zu einer Gesamtdrift verrechnet werden. Die eigentliche Korrektur kann entweder durch nachträgliche Bearbeitung der Bilddaten oder durch Nachführung der Strahl- oder Probenlage während der Bildaufnahme erfolgen.

R. McGorty, D. Kamiyama, B. Huang, "Active microscope stabilization in three dimensions using image correlation", Optical Nanoscopy 2 (1), 3 (2013) offenbart ein Verfahren, bei dem die Drift der Probe durch Nachführen eines Piezo-getriebenen Probentisches bis auf 10 nm in x- und y-Richtung und 20 nm in z-Richtung kompensiert wird. Dabei wird die Probendrift durch Kreuzkorrelation von Durchlichtbildern der Probe mit einem Referenz-Durchlichtbild bestimmt, wobei die Drift in x- und y-Richtung aus der Lage des Maximums der Kreuzkorrelation und die Drift in z-Richtung aus dessen Amplitude bestimmt werden. Zur Aufnahme der Durchlichtbilder wird die Probe mit Infrarotlicht durchleuchtet, das die Fluoreszenzbildgebung nicht beeinflusst.

Aus J. Prescher, "Assembly and optimization of a super-resolution STORM microscope for nanoscopic imaging of biological structures", Dissertation, München (2016) ist ein Verfahren zur lateralen Driftkorrektur in der PALM-/STORM-Mikroskopie bekannt, für das fluoreszierende Nanopartikel als Referenzobjekte in die Probe eingebracht werden. Zur Bestimmung der Drift der Probe in x- und y-Richtung werden während der STORM-Datenaufnahme wiederholt Epifluoreszenzbilder dieser Nanopartikel aufgenommen und mit einem anfangs aufgenommenem Referenz-Epifluoreszenzbild korreliert. Aus der Lage des Maximums der Kreuzkorrelation wird die Drift in x- und y-Richtung für den jeweiligen Zeitpunkt bestimmt und zur Ortskorrektur bei der Lokalisierung der fluoreszierenden Einzelmoleküle herangezogen.

Aus C. Geisler et al., "Drift estimation for single marker switching based imaging schemes", Optics Express 20, 7274 (2012) ist ein ebenfalls auf der Korrelation von mehreren Kamera(roh-)bildern beruhendes Verfahren zur Driftkorrektur in der STORM-/ PALM-Mikroskopie bekannt, bei dem allerdings die Probendrift als Funktion der Zeit durch paarweise Korrelation aller Kamera(roh-) bilder, nicht nur durch Korrelation mit einem einzigen Referenzbild, bestimmt wird. Ohne dass sonstige Annahmen über die Ursache oder die Art des Drifts gemacht werden müssen oder dass die Datenaufnahme modifiziert werden muss, kann die Genauigkeit bei der Einzelmolekül-Lokalisierung erheblich verbessert werden.

Wenngleich einige der genannten Verfahren auch bei kurzfristigen, transienten Störungen angewendet werden können, wie sie beispielsweise durch Gebäudeschwingungen, Schall oder durch Luftströmungen verursacht werden, konzentrieren sich die Offenbarungen schwerpunktmäßig auf die Korrektur langsamer Driftphänomene.

Die Patentveröffentlichung EP 1 258 767 A1 beschreibt ein Verfahren zur Kompensation von Abbildungsfehlern bei der Lichtmikroskopie, die durch Relativbewegungen zwischen der Probe und dem Objektiv auftreten. Solche Störungen werden durch Sensoren erfasst und es werden z.B. Stellmotoren angesteuert, um die erfassten Störungen durch eine Gegenbewegung zu kompensieren.

### Aufgabe der Erfindung

Der Erfindung liegt die Aufgabe zu Grunde, ein Verfahren und ein zugehöriges Laserscanningmikroskop anzugeben, mit dem eine hohe Lokalisationsgenauigkeit auch dann erreicht wird, wenn bei der Datenaufnahme nach der MINFLUX-Methode auftretende Störeinflüsse nicht vermieden werden können. Dabei sollen insbesondere kurzfristige/transiente Störeinflüsse adressiert werden.

### Lösung

Die Aufgabe der Erfindung wird durch ein Verfahren nach dem unabhängigen Anspruch 1, ein Verfahren nach dem unabhängigen Anspruch 6 sowie ein eines dieser Verfahren ausführendes Laserscanningmikroskop mit den Merkmalen der unabhängigen Patentansprüche 14 oder 15 gelöst. Die abhängigen Ansprüche 2 bis 5 sowie 7 bis 13 betreffen bevorzugte Ausführungsformen der Verfahren.

Der Begriff Laserscanningmikroskop wird hier in seiner breiten Bedeutung verstanden, d.h. von dem Begriff Laserscanningmikroskop sind hier neben Mikroskopen, bei denen das Abtasten des Bildfelds durch eine Strahlablenkeinheit bewirkt wird, auch solche Mikroskope erfasst, bei denen die Abtastung der Probe beispielsweise mittels Verschieben eines Probentischs oder mittels Verschieben des Objektivs bewirkt wird.

Die Erfindung basiert auf der Erkenntnis der Anmelderin, dass neben niederfrequenten Störungen, die mit aus dem Stand der Technik bekannten Verfahren unterdrückt oder kompensiert werden können, hochfrequente Störungen häufig kurzfristig auftreten, d.h. vorübergehend sind. Hierbei heißt kurzfristig, dass die Störungen Zeiträume umfassen, die klein sind im Vergleich zur Dauer einer Bildaufnahme nach dem im Folgenden beschriebenen MINFLUX-Verfahren; die Zeiträume können auch klein sein im Vergleich zur Dauer einer Lokalisierung eines einzelnen, an eine Struktur in einer Probe gekoppelten Fluoreszenzfarbstoffmoleküls sein. Ein Aspekt der Erfindung basiert auf der Erkenntnis, dass auch Messwerte, die unter schädlichem Störungseinfluss erhalten wurden, trotzdem für eine Lokalisierung und/oder für eine Bilderzeugung, insbesondere aber auch mit Bezug auf die Verfolgung von Bewegungen von an eine Struktur in einer Probe gekoppelten Fluoreszenzfarbstoffmolekülen relevante Information enthalten können.

Beide Verfahren zur Bestimmung von Orten einzelner an eine Struktur in einer Probe gekoppelter Fluoreszenzfarbstoffmoleküle umfassen dabei die aus dem Stand der Technik bekannten Verfahrensschritte i) sequenzielles Beleuchten eines einzelnen, räumlich isolierten Fluoreszenzfarbstoffmoleküls mit einer ein lokales Intensitätsminimum aufweisenden Intensitätsverteilung eines Anregungslichts oder mit einer Intensitätsverteilung des Anregungslichts und einer zur Intensitätsverteilung des Anregungslichts im Wesentlichen komplementären, ein lokales Intensitätsminimum aufweisenden Intensitätsverteilung von Fluoreszenzverhinderungslicht an einer Abfolge von unterschiedlichen Abtastpositionen des lokalen Intensitätsminimums zur Anregung des Fluoreszenzfarbstoffmoleküls zur Abgabe von Fluoreszenzlicht, ii) Detektieren der Anzahl von Fluoreszenzphotonen des Fluoreszenzlichts und Zuordnen der Anzahl der Fluoreszenzphotonen zu der jeweiligen Abtastposition bei jedem Schritt der Abfolge; iii) Bestimmen des Orts des Fluoreszenzfarbstoffmoleküls aus der Menge von einander zugeordneten Anzahlen von Fluoreszenzphotonen und Abtastpositionen mit einer Genauigkeit unterhalb einer Abmessung eines beugungsbegrenzten Volumens in einer Raumrichtung.

Das erste erfindungsgemäße Verfahren unterscheidet sich vom Stand der Technik dadurch, dass während des Beleuchtens der Probe die Größe einer Störung bestimmt wird und dass jedem Element der Menge von einander zugeordneten Anzahlen von Fluoreszenzphotonen und Abtastpositionen ein Gewichtungsfaktor zugeordnet wird, dessen Wert sich aus der Größe der Störung während des Detektierens der Fluoreszenzphotonen an der jeweiligen Abtastposition bestimmt, und dass bei der Bestimmung des Orts des Fluoreszenzfarbstoffmoleküls die Elemente der Menge von einander zugeordneten Anzahlen von Fluoreszenzphotonen und Abtastpositionen entsprechend ihrem Gewichtungsfaktor berücksichtigt werden.

Das zweite erfindungsgemäße Verfahren, dem derselbe Grundgedanke zugrunde liegt wie dem ersten, unterscheidet sich vom Stand der Technik dadurch, dass während des Beleuchtens der Probe die Größe einer Störung bestimmt wird und dass das Beleuchten des Farbstoffmoleküls an der Abfolge von Abtastpositionen und das Detektieren der Fluoreszenzphotonen unterbrochen wird, wenn die Größe der Störung einen ersten Grenzwert überschreitet.

Ein erfindungsgemäßes Laserscanningmikroskop weist zumindest Folgendes auf: i) eine Laserlichtquelle zur Bereitstellung von Anregungslicht, ii) optional eine Laserlichtquelle zur Bereitstellung von Fluoreszenzverhinderungslicht, iii) ein Phasenmodulationselement in einem Strahlengang des Anregungslichts oder in einem Strahlengang des Fluoreszenzverhinderungslichts; iv) ein Objektiv, das das Anregungslicht in eine Probe fokussiert und Fluoreszenzlicht aus der Probe empfängt; v) eine Strahlablenkeinrichtung und vi) einen Detektor für aus der Probe empfangenes Fluoreszenzlicht. Es unterscheidet sich vom Stand der Technik dadurch, dass es eine Messeinrichtung zur Erfassung einer Störung aufweist und dass es dazu ausgebildet ist, das erfindungsgemäße Verfahren auszuführen.

### Beschreibung der Erfindung

Bei dem erfindungsmäßen Verfahren handelt es sich um ein Verfahren zur hochgenauen Bestimmung von Orten einzelner an eine Struktur in einer Probe gekoppelter Fluoreszenzfarbstoffmoleküle, das auf dem aus dem Stand der Technik bekannten MINFLUX-Verfahren basiert, dieses aber dahingehend verbessert, dass während der Datenaufnahme auftretende Störungen erfasst und bei der Lokalisierung der Fluoreszenzfarbstoffmoleküle berücksichtigt werden.

Zur Durchführung des erfindungsgemäßen Verfahrens wird ein einzelnes, räumlich isoliertes Fluoreszenzfarbstoffmolekül mit einer ein lokales Intensitätsminimum aufweisenden Intensitätsverteilung eines Anregungslichts oder mit einer Intensitätsverteilung des Anregungslichts und einer zur Intensitätsverteilung des Anregungslichts im Wesentlichen komplementären, ein lokales Intensitätsminimum aufweisenden Intensitätsverteilung eines Fluoreszenzverhinderungslichts beleuchtet und zur Abgabe von Fluoreszenzlicht angeregt. Die Beleuchtung des Fluoreszenzfarbstoffmoleküls erfolgt sequenziell an einer Abfolge von unterschiedlichen Abtastpositionen des lokalen Intensitätsminimums, die um den Ort des Fluoreszenzfarbstoffmoleküls angeordnet sind und deren Abstand vom Ort des Fluoreszenzfarbstoffmoleküls im Regelfall in der Größenordnung der optischen Beugungsgrenze oder darunter liegt, also im Bereich von 250 nm oder weniger.

Zur Festlegung der Abtastpositionen ist dabei eine ungefähre Kenntnis des Ortes des Fluoreszenzfarbstoffmoleküls bereits vorab nötig. Diese Information kann beispielsweise durch vorherige Aufnahme eines (grob aufgelösten) konfokalen Bildes oder eines mit einer Kamera aufgenommenen Epifluoreszenzbildes der Probe oder des interessierenden Bereichs der Probe erhalten werden. Alternativ kann die Probe auch mit der Intensitätsverteilung des Anregungslichts abgetastet werden, bis das Fluoreszenzlicht eines Fluoreszenzfarbstoffmoleküls detektiert wird. Die aktuelle Abtastposition kann dann zur Festlegung der Abfolge von Abtastpositionen des Intensitätsminimums genutzt werden.

Aus praktischen Erwägungen wird die ein lokales Intensitätsminimum aufweisende Intensitätsverteilung des Anregungslichts oder die ein lokales Intensitätsminimum aufweisende Intensitätsverteilung des Fluoreszenzverhinderungslichts an den unterschiedlichen Abtastpositionen meist die gleiche Form aufweisen, was allerdings nicht zwingend ist; vielmehr kann das Beleuchten an den unterschiedlichen Abtastpositionen auch mit verschiedenen Formen der Intensitätsverteilung und insbesondere mit unterschiedlicher Stärke erfolgen. Wichtig ist lediglich, dass die Intensitätsverteilung des Anregungslichts oder des Fluoreszenzverhinderungslichts ein lokales Intensitätsminimum aufweist, wobei das lokale Minimum punktförmig, linienförmig oder als Fläche ausgebildet sein kann. Derartige Intensitätsverteilungen sind durch Phasenmodulation der Wellenfront des Lichts erzeugbar und sind aus dem Stand der Technik umfassend bekannt.

Bei jedem Beleuchtungsschritt der Abfolge von Abtastpositionen des lokalen Intensitätsminimums wird das von dem Farbstoffmolekül abgegebene Fluoreszenzlicht detektiert und die Anzahl von Fluoreszenzphotonen der jeweiligen Abtastposition zugeordnet. Optional können den Wertepaaren auch Zeitstempel hinzugefügt werden, über die zu einem späteren Zeitpunkt eine Zuordnung von unabhängig erhobenen Messungen einer Störung erfolgen kann, wie weiter unten erläutert wird. In Abhängigkeit von der Emissionsrate der Fluoreszenzphotonen und der Anzahl von Photonen, die einzelne Moleküle des Fluoreszenzfarbstoffs durchschnittlich abgeben, bevor sie bleichen oder in einen Dunkelzustand übergehen, kann es sinnvoll sein, die Beleuchtung des Farbstoffmoleküls an der oder an einer neuen Abfolge von Abtastpositionen zu wiederholen. Besonders vorteilhaft ist es, die Abtastpositionen auf der Basis einer ersten oder einer vorangegangenen Ortsbestimmung des Fluoreszenzfarbstoffmoleküls gemäß dem unten erläuterten Schema zu aktualisieren und die Abtastpositionen dichter um den Ort des Farbstoffmoleküls anzuordnen. Auch eine Anpassung, insbesondere eine Erhöhung der Gesamtintensität der ein lokales Intensitätsminimum aufweisenden Intensitätsverteilung kann die Genauigkeit der Ortsbestimmung verbessern. Die Abfolge von Abtastpositionen kann jeweils vollständig vor Beginn des Beleuchtens an den Abtastpositionen festgelegt werden, beispielsweise auf die Eckpunkte eines um den angenommen Ort des Fluoreszenzfarbstoffmoleküls zentrierten Polygons (für eine zweidimensionale Ortsbestimmung) oder auf die Eckpunkte eines um den angenommen Ort des Fluoreszenzfarbstoffmoleküls zentrierten Polyeders (für eine dreidimensionale Ortsbestimmung) des Fluoreszenzfarbstoffmoleküls. Alternativ kann die Abfolge von Abtastpositionen auch dynamisch, d.h. zwischen aufeinander folgenden Abtastpositionen der Abfolge unter Berücksichtigung der an den vorhergehenden Abtastpositionen detektierten Anzahlen von Fluoreszenzphotonen angepasst werden.

Erfindungsgemäß wird während des Detektierens des Fluoreszenzlichts an den Abtastpositionen eine Störung erfasst. In einer bevorzugten Ausführungsform des Verfahrens wird jedem Wertepaar der Menge von einander zugeordneten Anzahlen von Fluoreszenzphotonen und Abtastpositionen ein Gewichtungsfaktor zugeordnet, dessen Wert sich aus der Größe der Störung während des Detektierens der Fluoreszenzphotonen an der jeweiligen Abtastposition bestimmt.

Die Messung der Störung und die Bestimmung der Gewichtungsfaktoren kann dabei mit dem Detektieren der Fluoreszenzphotonen synchronisiert erfolgen, so dass der Zeitpunkt bzw. das Zeitintervall der Störungsmessung und der entsprechenden Fluoreszenzdetektion übereinstimmen. Alternativ kann die Störung kontinuierlich erfasst und der Wert der Störung in regelmäßigen Intervallen gespeichert werden. Durch zeitliche Korrelation kann so im Nachhinein jedem Element der Menge von einander zugeordneten Anzahlen von Fluoreszenzphotonen und Abtastpositionen des lokalen Intensitätsminimums ein Gewichtungsfaktor zugeordnet werden. In diesem Fall ist die Störungsmessung auch mit einer unabhängig arbeitenden Messeinrichtung durchführbar.

Aus der Menge einander zugeordneter Anzahlen von Fluoreszenzphotonen und Abtastpositionen lässt sich der Ort des Fluoreszenzfarbstoffmoleküls mit einer Genauigkeit weit unterhalb der optischen Beugungsgrenze berechnen. Im einfachsten Fall geschieht dies durch Bilden der mit den Anzahlen der Fluoreszenzphotonen gewichteten Summe der Ortsvektoren der Abtastpositionen. Ein gängiges, weitaus genaueres Verfahren basiert auf einem *Maximum Likelihood Estimator* (MLE), wobei für die Intensitätsverteilung in der Nähe des lokalen Intensitätsminimums meist eine parabolische Näherung angenommen wird. Zum diesbezüglichen Stand der Technik sei beispielhaft auf F. Balzarotti et al., "Nanometer resolution imaging and tracking of fluorescent molecules with minimal photon fluxes", Science 355, 606 (2017) inklusive dem zugehörigen Supplementary Material (letzteres abrufbar unter https://science.sciencemag.org/content/suppl/ 2016/12/21/science.aak9913.DC1 ) verwiesen.

Für die erfindungsmäße Ortsbestimmung des Fluoreszenzfarbstoffmoleküls können prinzipiell die aus dem Stand der Technik bekannten Berechnungsverfahren angewendet werden; sie müssen jedoch so modifiziert werden, dass die Wertepaare aus einander zugeordneten Anzahlen von Fluoreszenzphotonen und Abtastpositionen entsprechend ihrer Gewichtungsfaktoren unterschiedlich stark, beispielsweise multiplikativ, in die Berechnung eingehen. Die Gewichtungsfaktoren können auch den Wert null annehmen, um so das jeweilige Wertepaar aus der Anzahl von Fluoreszenzphotonen und der zugehörigen Abtastposition bei der Ortsbestimmung unberücksichtigt zu lassen. Alternativ können andere, auch nichtlineare funktionale Abhängigkeiten von den Gewichtungsfaktoren realisiert werden. Es können auch Werteintervalle für den Gewichtungsfaktor gebildet werden, wobei alle Wertepaare aus der Anzahl von Fluoreszenzphotonen und der zugehörigen Abtastposition, deren Gewichtungsfaktoren im gleichen Werteintervall liegen, mit dem gleichem Gewicht in die Ortsbestimmung eingehen. Dieses Vorgehen entspricht einer Diskretisierung der Gewichtungsfaktoren. Im Extremfall stellen die diskretisierten Gewichtungsfaktoren nur noch binäre Werte bzw. Wahrheitswerte dar, die anzeigen, ob während des Detektierens der Fluoreszenzphotonen eine Störung vorgelegen hat bzw. ob die Störung einen Grenzwert überschritten hat.

Die Gewichtungsfaktoren können auch herangezogen werden, um für die Abtastpositionen Fehlergrenzen bzw. Konfidenzintervalle zu berechnen. Durch die Anwendung einer Fehlerfortpflanzungsrechnung, beispielsweise nach ISO/IEC Guide 98-3:2008: *Uncertainty of measurement - Part 3: Guide to the expression of uncertainty in measurement.* ISO, Genf 2008, ISBN 92-67-10188-9, bei der Ortsberechnung kann so ein (fundierteres) Konfidenzintervall für den berechneten Ort des Fluoreszenzfarbstoffmoleküls abgeleitet werden.

In einer weiteren bevorzugten Ausführungsform des erfindungsgemäßen Verfahrens wird das Beleuchten des Fluoreszenzfarbstoffmoleküls und das Detektieren der Fluoreszenzphotonen unterbrochen, wenn die parallel erfasste Störung einen ersten Grenzwert überschreitet. Die Messung kann dabei endgültig abgebrochen oder bei Unterschreiten eines zweiten Grenzwertes wieder aufgenommen werden. Der zweite Grenzwert kann dabei identisch mit dem ersten Grenzwert gewählt werden; allerdings ist es vorteilhaft, den zweiten Grenzwert (geringfügig) kleiner als den ersten Grenzwert zu wählen, so dass zwischen Unterbrechen und Wiederaufnahme der Messung eine Hysterese besteht und keine schnellen Unterbrechungs- und Wiederaufnahmezyklen auftreten. Um ein Einfrieren der Datenaufnahme zu vermeiden wird dabei bevorzugt eine Zeitbegrenzung festgelegt, nach deren Ablauf die Messung abgebrochen wird, wenn der Wert der Störung den zweiten Grenzwert noch nicht (wieder) unterschritten hat. Erfindungsgemäß kann der Ort eines einzelnen Fluoreszenzfarbstoffmoleküls mehrfach hintereinander bestimmt werden, so dass sich der Ort als Funktion der Zeit angeben lässt ("Tracking"). Aus derartigen Datenreihen lassen sich Trajektorien einzelner Farbstoffmoleküle in einer Probe und speziell innerhalb einer biologischen Zelle erstellen und grafisch darstellen. Mit Hilfe dieser Trajektorien lassen sich beispielsweise Diffusionsphänomene und molekulare Wechselwirkungen mit hoher räumlicher Auflösung studieren. Für diese Anwendung eignet sich insbesondere die eingangs dargestellte Ausführungsform des Verfahrens, bei der den einander zugeordneten Anzahlen von Fluoreszenzphotonen und Abtastpositionen Gewichtungsfaktoren zugeordnet werden, die Datenaufnahme aber durchgängig erfolgt. Ein Unterbrechen der Datenaufnahme bei Überschreiten eines Grenzwerts der Störung ist für Tracking-Anwendungen weniger geeignet, da die Gefahr besteht, dass sich das Fluoreszenzmolekül während der Unterbrechungsphasen aus dem Bereich der Abtastpositionen bewegt und sich zu einem späteren Zeitpunkt (nach Abklingen der Störung) außerhalb der Abtastpositionen befindet, so dass es nicht mehr lokalisiert werden kann.

Das erfindungsgemäße Verfahren kann auch eingesetzt werden, um die Orte mehrerer unterschiedlicher Farbstoffmoleküle zu bestimmen. Wie aus dem Stand der Technik zur PALM- und STORM-Mikroskopie bekannt ist, kann ein räumlich hochaufgelöstes Abbild der mit dem Fluoreszenzfarbstoff markierten Struktur in der Probe generiert werden, indem die aus der Ortsbestimmung resultierenden Koordinaten beispielsweise in Form eines zweidimensionalen Histogramms oder einer ähnlichen Repräsentation dargestellt werden.

Insoweit Fluoreszenzfarbstoffmoleküle räumlich vereinzelt, also im Abstand von mehr als einer Beugungsgrenze vorliegen, kann die Ortsbestimmung auch an mehreren Fluoreszenzfarbstoffmolekülen gleichzeitig oder quasi-gleichzeitig durchgeführt werden, vorausgesetzt, es stehen Mittel zum gleichzeitigen, aber voneinander unabhängigen Beleuchten und Detektieren von Fluoreszenzphotonen mehrerer Fluoreszenzfarbstoffmoleküle bereit. Räumlich vereinzelt vorliegende Fluoreszenzfarbstoffmoleküle können beispielsweise durch Verwendung einer entsprechend hohen Verdünnung des Farbstoffs bei der Markierung der Probe erreicht werden. Um eine hochaufgelöste, räumlich möglichst kontinuierliche Abbildung der Struktur generieren zu können ist es allerdings erforderlich, dass die Struktur mit vielen, in großer Dichte angeordneten Fluoreszenzfarbstoffmolekülen markiert ist und dass die Orte eines hinreichend großen Teils dieser Fluoreszenzfarbstoffmoleküle bestimmt werden. Hierzu sind typischerweise Ortsbestimmungen von mehreren Tausend Fluoreszenzfarbstoffmolekülen erforderlich. Die hohe Markierungsdichte mit Fluoreszenzfarbstoffmolekülen bedingt allerdings, dass immer nur ein kleiner Anteil der Farbstoffmoleküle in einem fluoreszenten Zustand vorliegen darf, um die Anforderung, dass fluoreszente Moleküle einzeln und räumlich isoliert vorliegen, erfüllen zu können. In üblichen Ausführungsformen des erfindungsgemäßen Verfahrens wird man daher auf fotoschaltbare Fluoreszenzfarbstoffe zurückgreifen, wie sie auch aus der PALM-/STORM-Mikroskopie bekannt sind. Fotoschaltbare Fluoreszenzfarbstoffe weisen einen fluoreszenten Zustand auf, in dem der Farbstoff mit Anregungslicht geeigneter Wellenlänge zur Abgabe einer Fluoreszenz angeregt werden kann, und weisen weiterhin einen Dunkelzustand auf, in dem der Farbstoff mit dem Anregungslicht nicht zur Abgabe der Fluoreszenz angeregt werden kann. Dabei lässt sich der Farbstoff zumindest einmal fotoaktivieren, d.h. aus dem Dunkelzustand in den fluoreszenten Zustand überführen. Die Fotoaktivierung erfolgt oft lichtinduziert, d.h. durch Beleuchtung mit Fotoaktivierungslicht geeigneter Wellenlänge (meist im blau-violetten Spektralbereich), kann aber auch spontan erfolgen. Je nach Art des Fluoreszenzfarbstoffs kann die Fotoaktivierung auch reversibel sein, d.h. es können mehrere Aktivierungs-Deaktivierungsschaltzyklen durchlaufen werden, wobei auch die Fotodeaktivierung lichtinduziert oder spontan erfolgen kann. Ein typischer Schaltmechanismus ist der (reversible) Übergang aus dem fluoreszenten Zustand in einen transienten Dunkelzustand, beispielsweise einen Triplettzustand. Die Schaltkinetiken dieser Übergänge können unter anderem über die Lösungsmittelzusammensetzung, durch Zusatz von Redox-Reagenzien und/oder durch Kontrolle der Sauerstoffkonzentration in der Probe an die jeweiligen Erfordernisse angepasst werden.

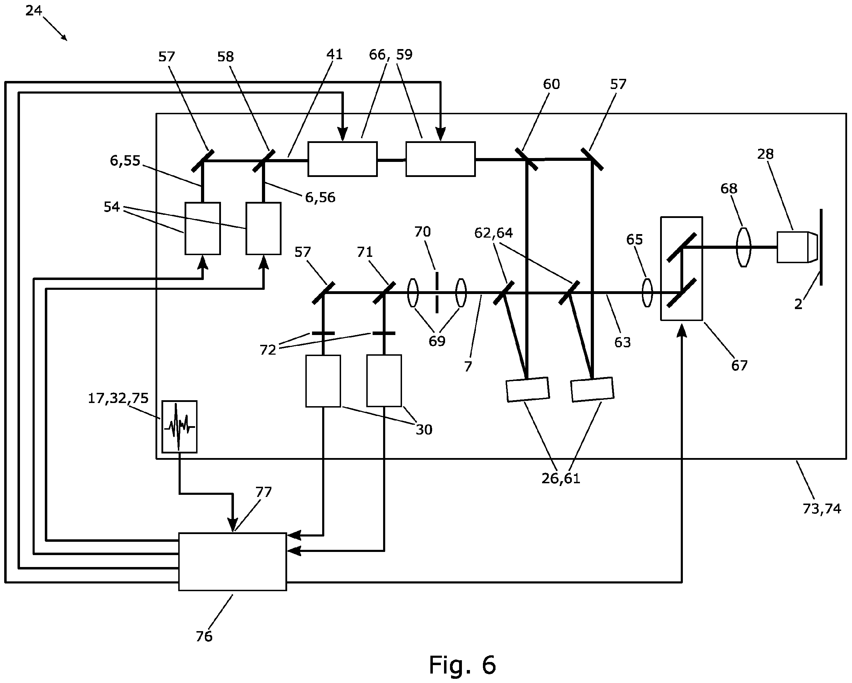

Ein erfindungsgemäßes Laserscanningmikroskop umfasst eine Anregungslichtquelle zur Bereitstellung von Anregungslicht und optional eine Lichtquelle zur Bereitstellung von Fluoreszenzverhinderungslicht, ein Phasenmodulationselement in einem Strahlengang des Anregungslichts oder des Fluoreszenzverhinderungslichts, ein Objektiv, das das Anregungslicht und ggf. das Fluoreszenzverhinderungslicht in eine Probe fokussiert und Fluoreszenzlicht aus der Probe empfängt, eine Strahlablenkeinrichtung, einen Detektor für aus der Probe empfangenes Fluoreszenzlicht und eine Messeinrichtung zur Erfassung einer Störung, wobei das Laserscanningmikroskop dazu ausgebildet ist, das erfindungsgemäße Verfahren auszuführen. Bevorzugte Ausführungsformen des erfindungsgemäßes Laserscanningmikroskops sind insbesondere den Figuren 6 bis 10 zu entnehmen.

Störungen, durch die Ortsbestimmungsverfahren für Einzelmoleküle oft beeinflusst werden, umfassen neben Temperaturschwankungen insbesondere vom Gebäude auf das Mikroskop übertragene Vibrationen und Schwingungen sowie in vielen Fällen auch von Lüftungsanlagen verursachte Luftströmungen. Gerade bei höchstauflösenden Verfahren sind oft auch Schall und sogar Sprechen Quelle für Störungen. Weiterhin können neben langsamen, meist durch unzureichende Klimatechnik verursachte Temperaturschwankungen auch schnellere Temperaturfluktuationen auftreten, beispielsweise beim Öffnen von Türen zwischen unterschiedlich warmen Räumen. Zur (quantitativen) Erfassung derartiger Störungen steht eine Vielzahl handelsüblicher Sensoren zur Verfügung. Von besonderem Interesse für das erfindungsgemäße Verfahren und das das erfindungsgemäße Verfahren ausführende Laserscanningmikroskop sind folglich vor allem Erschütterungssensoren, Beschleunigungssensoren, optische, kapazitive oder induktive Abstandssensoren, Positionssensoren, Mikrofone, Drucksensoren, Strömungssensoren und Temperatursensoren. Viele dieser Sensoren sind in miniaturisierter Form, mit hoher Sensitivität und oft sogar zu geringen Kosten kommerziell erhältlich und können direkt in ein erfindungsgemäßes Laserscanningmikroskop integriert und von der Steuerung des Laserscanningmikroskops ausgelesen werden. Durch die Integration des Sensors in das Laserscanningmikroskop ist eine Synchronisierung des Beleuchtens und des Detektierens der Fluoreszenzphotonen mit der Messung der Störung einfach realisierbar.

Störungen können aber auch unabhängig vom Beleuchten des Fluoreszenzfarbstoffmoleküls und vom Detektieren der Fluoreszenzphotonen erfasst werden, beispielsweise mit einem Sensor, dessen Messwerte mit einem Datenlogger kontinuierlich erfasst und aufgezeichnet werden. In diesem Fall ist es erforderlich, dass sowohl die Elemente der Menge einander zugeordneter Anzahlen von Fluoreszenzphotonen und Abtastpositionen einerseits und die gemessenen Werte der Störung andererseits mit Zeitstempeln versehen werden, so dass eine Zuordnung beider Messungen zueinander im Nachhinein möglich ist.

Die Erfassung der Störung kann auch in einen Strahlengang des erfindungsgemäßen Laserscanningmikroskops integriert sein. Hierzu kann aus dem Strahlengang des Anregungslichts und/oder des Fluoreszenzverhinderungslichts ein geringer Teil des Anregungslichts und/oder des Fluoreszenzlichts ausgekoppelt und auf einen Lichtdetektor gerichtet werden. Unter dem Einfluss von Störungen ändert sich nicht nur die Lage des fokussierten Anregungslichts und ggf. des fokussierten Fluoreszenzverhinderungslichts in der Probe, sondern auch die Lage des ausgekoppelten Teils des Anregungslichts und/oder des ausgekoppelten auf dem Lichtdetektor. Um diese (geringfügigen) Lageänderungen zu erfassen, kann der Lichtdetektor als positionssensitiver Detektor (PSD) oder als segmentierter Detektor, insbesondere auch in Form einer Kamera, ausgeführt sein. Eine besonders hohe Empfindlichkeit kann erreicht werden, wenn vor dem Lichtdetektor ein Interferometer angeordnet wird, das bereits geringste Störungen, insbesondere Vibrationen oder Luftströmungen, in leicht detektierbare Helligkeitsschwankungen übersetzt. Eine nochmals gesteigerte Empfindlichkeit kann erzielt werden, wenn das Interferenzmuster mit einem räumlich auflösenden Detektor, speziell einer Kamera, aufgenommen und das Interferenzmuster durch eine Bildverarbeitung auf Änderungen untersucht wird. Auf diese Weise können auch Störungen der Strahllage erfasst werden, die weit unterhalb der Wellenlänge des Lichts liegen.

Anstatt einen kleinen Teil des Anregungslichts und/oder des Fluoreszenzverhinderungslichts aus dem Strahlengang auszukoppeln, ist es alternativ möglich, einen separaten, von einer Hilfslichtquelle bereitgestellten Messlichtstrahl zu verwenden. Dabei ist es vorteilhaft, die Wellenlänge des Hilfslichts so zu wählen, dass sie spektral außerhalb des Anregungs- und Emissionsbereichs des Fluoreszenzfarbstoffs liegt, beispielsweise im infraroten Spektralbereich. Bei Verwendung eines von einer Hilfslichtquelle bereitgestellten Messlichtstrahls ist sicherzustellen, dass er in ähnlicher Weise von der zu erfassenden Störung beeinflusst wird wie der Anregungslichtstrahl und/oder der Fluoreszenzverhinderungslichtstrahl, zumindest aber eine signifikante Aussage über die Größe der Störung des Anregungslichtstrahls und/oder des Fluoreszenzverhinderungslichtstrahls ermöglicht. Wahlweise kann der von der Hilfslichtquelle bereitgestellte Messlichtstrahl hierzu in den Strahlengang des Anregungslichts und/oder des Fluoreszenzverhinderungslichts eingekoppelt werden derart, dass der Messlichtstrahl zumindest entlang eines Abschnitts des Strahlengangs zusammen mit dem Strahl des Anregungslichts und/oder des Fluoreszenzverhinderungslichts verläuft. Es ist aber auch möglich, den Messlichtstrahl unabhängig vom Anregungslichtstrahl und/oder dem Fluoreszenzverhinderungslichtstrahl zu führen, solange er von Störungen in ähnlicher Weise beeinflusst wird wie der Anregungslichtstrahl und/oder der Fluoreszenzverhinderungslichtstrahl, beispielsweise infolge einer mechanischen Kopplung der strahlführenden Elemente beider Strahlengänge.

In einer vorteilhaften Weiterbildung der Erfindung können auch zwei oder mehr an unterschiedlichen Stellen positionierte Sensoren vorgesehen sein, um räumlich variierende Störungen wie beispielsweise Luftströmungen genauer zu erfassen. Die Messeinrichtung zur Erfassung der Störung kann auch so ausgebildet sein, dass mehrere Störungsarten gleichzeitig erfasst werden, beispielsweise Vibrationen, Luftströmungen und Geräusche. Hierzu kann die Messeinrichtung eine Kombination unterschiedlicher der genannten Sensoren aufweisen. Werden mehrere Störungsarten gleichzeitig erfasst, kann der Gewichtungsfaktor aus den Werten aller Störungen berechnet oder aus der jeweils stärksten Störung abgeleitet werden. Alternativ kann das Beleuchten des Fluoreszenzmoleküls unterbrochen werden, solange der Wert einer der Störungen über einem für diese Störung festgelegten Grenzwert liegt.

In weiteren vorteilhaften Weiterbildungen der Erfindung kann vorgesehen sein, dass die Messeinrichtung zur Erfassung der Störung eingerichtet ist, ein Signal mittelbar oder unmittelbar an eine Anzeigeeinrichtung zu senden; auf der Anzeigeeinrichtung kann eine Information über die Stärke von Störungen angezeigt werden, es kann angezeigt werden, ob eine Messung unterbrochen oder abgebrochen wurde oder ob eine Messung planmäßig beendet wurde. Eine solche Anzeigeeinrichtung kann bevorzugt räumlich vom Laserscanningmikroskop entfernt platziert sein, damit Aktionen des Bedieners, der den Versuch durchführt, wie z.B. Sprechen, die Messung nicht stören.

In einer weiteren vorteilhaften Weiterbildung der Erfindung kann das Signal der Messeinrichtung zur Erfassung der Störung genutzt werden, um während des Beleuchtens des Fluoreszenzfarbstoffmoleküls und der Detektion des Fluoreszenzlichts eine Strahllagekorrektur vorzunehmen. Hierzu kann aus der Größe der Störung in Echtzeit ein Korrekturwert berechnet werden, um den das Steuersignal der erfindungsgemäßen Strahlablenkvorrichtung, insbesondere der elektrooptischen Deflektoren, korrigiert wird und so die Abtastposition des Intensitätsminimums des Anregungslichts in der Probe an ihrer Sollposition gehalten wird. Diese Korrektur kann vorteilhaft auch ohne eine gleichzeitige Realisierung aller anderen Merkmale der Erfindung zur Anwendung kommen und stellt insofern eine eigene Erfindung dar.

Gemäß einer Ausführungsform des Laserscanningmikroskops umfasst die Messeinrichtung zur Erfassung der Störung einen Erschütterungssensor, einen Beschleunigungssensor, einen optischen, kapazitiven oder induktiven Abstandssensor, einen Positionssensor, ein Mikrofon, einen Drucksensor, einen Strömungssensor, einen Temperatursensor oder eine Kombination verschiedener solcher Sensoren.

Gemäß einer weiteren Ausführungsform des Laserscanningmikroskops umfasst die Messeinrichtung zur Erfassung der Störung einen Messlichtstrahl und einen Lichtdetektor oder die Messeinrichtung zur Erfassung der Störung ist dazu ausgebildet, einen Messlichtstrahl zu erzeugen und weist einen Lichtdetektor auf.

Gemäß einer weiteren Ausführungsform des Laserscanningmikroskops umfasst die Messeinrichtung zur Erfassung der Störung einen im Strahlengang des Anregungslichts angeordneten Strahlteiler, der einen Teil des Anregungslichts aus dem Strahlengang des Anregungslichts auskoppelt und auf den Lichtdetektor richtet.

Gemäß einer weiteren Ausführungsform des Laserscanningmikroskops umfasst die Messeinrichtung zur Erfassung der Störung einen im Strahlengang des Fluoreszenzverhinderungslichts angeordneten Strahlteiler, der einen Teil des Fluoreszenzverhinderungslichts aus dem Strahlengang des Fluoreszenzverhinderungslichts auskoppelt und auf den Lichtdetektor richtet.

Gemäß einer weiteren Ausführungsform des Laserscanningmikroskops ist der Lichtdetektor als positionssensitiver Detektor oder als segmentierter Detektor ausgebildet.

Gemäß einer weiteren Ausführungsform des Laserscanningmikroskops ist vor dem Lichtdetektor ein Interferometer angeordnet.

Weitere vorteilhafte Weiterbildungen der Erfindung ergeben sich aus den Patentansprüchen, der Beschreibung und den Zeichnungen. Die in der Beschreibung beschriebenen Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents das Folgende: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Figuren dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Der in den Patentansprüchen und der Beschreibung genutzte unbestimmte Artikel "ein" für ein Merkmal ist so zu verstehen, dass es sich hinsichtlich der Anzahl um genau eine oder auch um mehrere Ausführungen dieses Merkmals handeln kann, ohne dass es einer expliziten Verwendung des Adverbs "mindestens" bedarf. Die in den Patentansprüchen angeführten Merkmale können gegebenenfalls durch weitere Merkmale ergänzt werden oder auch die einzigen Merkmale sein, die das jeweilige Verfahren oder das Laserscanningmikroskop aufweist.

### Kurzbeschreibung der Figuren

- Fig. 1: zeigt eine bevorzugte Ausführungsform des erfindungsgemäßen Verfahrens in Form eines Ablaufdiagramms.
- Fig. 2: zeigt eine weitere bevorzugte Ausführungsform des erfindungsgemäßen Verfahrens in Form eines Ablaufdiagramms.
- Fig. 3: illustriert den zeitlichen Ablauf der Datenaufnahme gemäß der in Fig. 2 gezeigten Ausführungsform des erfindungsgemäßen Verfahrens.
- Fig. 4: zeigt ein Datenformat 42 zur Speicherung der einander zugeordneten Anzahlen 10 von Fluoreszenzphotonen und Abtastpositionen 9 mit einer Kennung 43.
- Fig. 5: zeigt ein Datenformat 42 zur Speicherung der einander zugeordneten Anzahlen 10 von Fluoreszenzphotonen und Abtastpositionen 9 mit der jeweiligen Größe der Störsignals 46 und einem Zeitstempel 12.
- Fig. 6: zeigt eine Ausführungsform des erfindungsgemäßen Laserscanningmikroskops 24.
- Fig. 7: zeigt eine bevorzugte Ausführungsform des erfindungsgemäßen Laserscanningmikroskops 24 mit mehreren Sensoren 32.
- Fig. 8: zeigt eine bevorzugte Ausführungsform des erfindungsgemäßen Laserscanningmikroskops 24 mit einem in den Strahlengang 27 des Anregungslichts eingekoppelten Messlichtstrahl 40 und einem segmentiertem Detektor 36.
- Fig. 9: zeigt eine bevorzugte Ausführungsform des erfindungsgemäßen Laserscanningmikroskops 24 mit einem von einer Hilfslichtquelle 39 bereitgestellten Messlichtstrahl 40 und einem positionssensitiven Detektor 35.
- Fig. 10: zeigt eine bevorzugte Ausführungsform des erfindungsgemäßen Laserscanningmikroskops 24 mit einem aus dem Anregungsstrahlengang 41 ausgekoppelten Messlichtstrahl 40 und einer ein Interferometer 38 umfassenden Messeinrichtung 17.
- Fig. 11: zeigt drei Abtastpositionen 9 aus der Abfolge 8 von Abtastschritten einer Verfahrensvariante, bei der das Fluoreszenzfarbstoffmolekül 3 mit Anregungslicht 6 und Fluoreszenzverhinderungslicht 11 beleuchtet wird.

### Beschreibung der Figuren

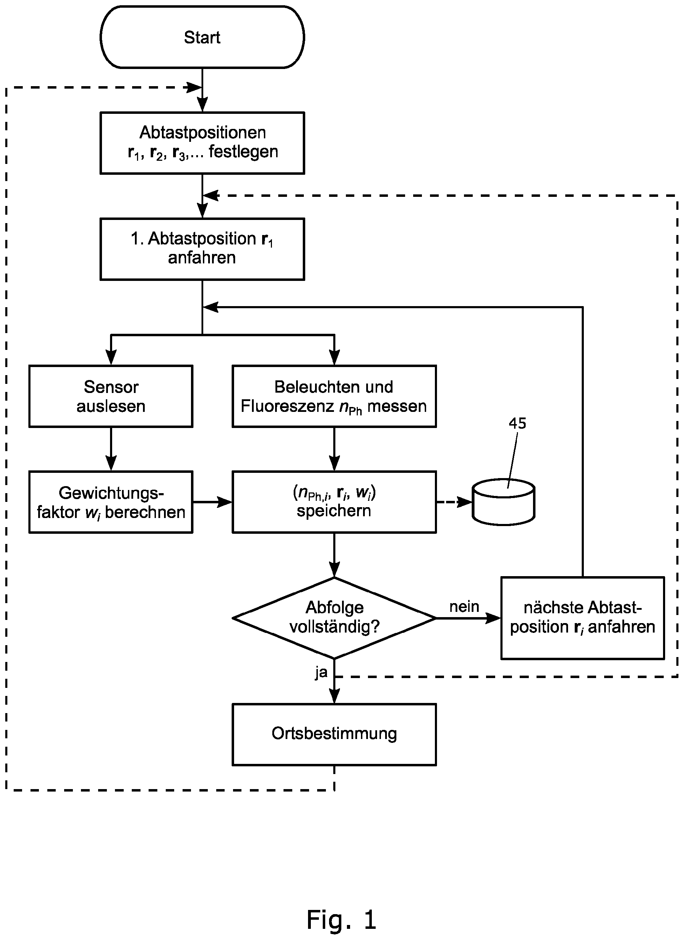

**Fig. 1** zeigt ein Ablaufdiagramm für eine bevorzugte Ausführungsform des erfindungsgemäßen Verfahrens. Dabei ist vorausgesetzt, dass in einer Probe 2 Fluoreszenzfarbstoffmoleküle 3 in einem fluoreszenten Zustand 22 in vereinzelter Form vorliegen, dass ein einzelnes, räumlich isoliertes Fluoreszenzfarbstoffmolekül 3 für die Ortsbestimmung ausgewählt wurde und dass sein ungefährer Ort 1 in der Probe 2 bekannt ist. Zur Herstellung dieser Voraussetzungen sei auf die Erfindungsbeschreibung verwiesen. Für die Ortsbestimmung nach dem erfindungsgemäßen Verfahren wird im ersten Schritt eine Abfolge 8 von Abtastpositionen 9 **r**₁, **r**₂, **r**₃, ... festgelegt, wobei die Abtastpositionen 9 um den angenommenen Ort 1 des ausgewählten Fluoreszenzfarbstoffmoleküls 3 herum angeordnet werden. Nachfolgend wird das Fluoreszenzfarbstoffmolekül 3 mit einer ein lokales Intensitätsminimum 4 aufweisenden Intensitätsverteilung 5 von Anregungslicht 6 beleuchtet, wobei das Intensitätsminimum 4 zunächst an der ersten Abtastposition 9 **r***ᵢ*, *i* = 1 positioniert wird. Während des Beleuchtens werden die von dem Fluoreszenzfarbstoffmolekül 3 infolge der Beleuchtung abgegebenen Fluoreszenzphotonen detektiert und der Wert eines eine Störung anzeigenden Sensors 32 ausgelesen. Nach der Berechnung des Gewichtungsfaktors *wᵢ* aus dem Messwert des Sensors 32 werden die Anzahl *n*_{Ph,*i*} der detektierten Fluoreszenzphotonen, die Abtastposition 9 und der Gewichtungsfaktor als Tupel 44 der Form (*n*_{Ph,*i*}, **r***ᵢ*, *wᵢ*) in einem Datenspeicher 45 gespeichert. Das Beleuchten und Detektieren der Fluoreszenzphotonen und das Messen der Störung wird für alle weiteren Abtastpositionen 9 **r***ᵢ*, *i* = 2, 3, ... der Abfolge 8 fortgesetzt. Nach dem Abtasten aller Abtastpositionen 9 der Abfolge 8 kann die Abfolge 8 als Ganzes wiederholt werden, um das Signal-zu-Rausch-Verhältnis zu verbessern. Nach der Datenerhebung erfolgt die Ortsbestimmung des Fluoreszenzfarbstoffmoleküls 3 unter Berücksichtigung des jedem Datenpunkt zugeordneten Gewichtsfaktors, wobei eine gegenüber der anfänglichen Abschätzung stark verbesserte Schätzung des Orts 1 des Fluoreszenzfarbstoffmoleküls 3 resultiert. Sofern die gewünschte Genauigkeit der Ortsbestimmung noch nicht erreicht ist, kann das Verfahren mit neu festgelegten Abtastpositionen 9 und einer ggf. erhöhten Gesamtintensität des Anregungslichts 6 wiederholt werden.

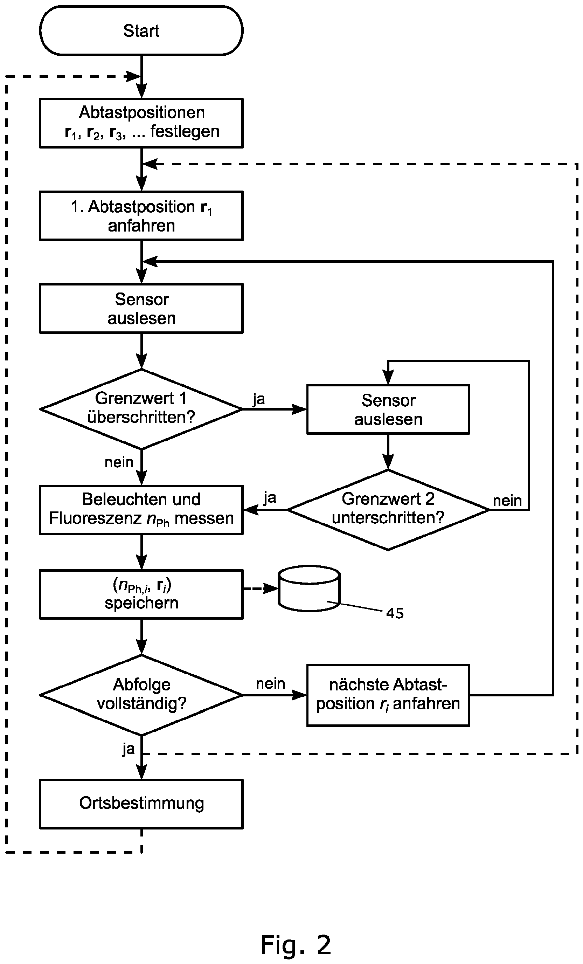

**Fig. 2** zeigt ein Ablaufdiagramm für eine weitere bevorzugte Ausführungsform des erfindungsgemäßen Verfahrens. Wie zuvor ist dabei vorausgesetzt, dass in der Probe 2 Fluoreszenzfarbstoffmoleküle 3 in einem fluoreszenten Zustand 22 in vereinzelter Form vorliegen, dass ein einzelnes, räumlich isoliertes Fluoreszenzfarbstoffmolekül 3 für die Ortsbestimmung ausgewählt wurde und dass sein ungefährer Ort 1 in der Probe 2 bekannt ist. Im ersten Schritt wird wiederum eine Abfolge 8 **r**₁, **r**₂, **r**₃, ... von Abtastpositionen festgelegt, wobei die Abtastpositionen um den angenommenen Ort 1 des ausgewählten Moleküls herum angeordnet werden. Das Intensitätsminimum 4 des Anregungslichts 6 wird an der ersten der zuvor festgelegten Abtastpositionen 9 **r***ᵢ*, *i* = 1 positioniert. Nun wird der Wert des eine Störung anzeigenden Sensors 32 ausgelesen. Sofern der Wert der Störung einen ersten Grenzwert 20 übersteigt, wird die Datenaufnahme so lange pausiert, bis der Wert der Störung einen zweiten Grenzwert 21 unterschreitet, wobei der zweite Grenzwert 21 vorzugsweise geringfügig kleiner festgelegt ist als der erste Grenzwert 20. Anschließend wird mit dem Beleuchten des Fluoreszenzfarbstoffmoleküls 3 mit Anregungslicht 6 und dem Detektieren der Fluoreszenzphotonen fortgefahren und ein Wertepaar (*n*_{Ph,*i*}, **r***ᵢ*) bestehend aus der Anzahl *n*_{Ph,*i*} der detektierten Fluoreszenzphotonen und der Abtastposition 9 **r***ᵢ* in einem Datenspeicher 45 gespeichert. Das Beleuchten und Detektieren der Fluoreszenzphotonen wird für alle weiteren Abtastpositionen 9 **r***ᵢ*, *i* = 2, 3, ... der Abfolge 8 fortgesetzt, wobei vor *jedem* Beleuchtungs-/ Detektionsschritt geprüft wird, ob der erste Grenzwert 20 der Störung überschritten ist und die Datenaufnahme ggf. unterbrochen wird, bis der zweite Grenzwert 21 wieder unterschritten ist. Nach dem Abtasten aller Abtastpositionen 9 der Abfolge 8 kann die Abfolge 8 als Ganzes wiederholt werden, um das Signal-zu-Rausch-Verhältnis zu verbessern. Nach der Datenerhebung erfolgt die Ortsbestimmung des Fluoreszenzfarbstoffmoleküls 3, wobei eine gegenüber der anfänglichen Abschätzung stark verbesserte Schätzung des Orts 1 des Fluoreszenzfarbstoffmoleküls 3 resultiert. Sofern die gewünschte Genauigkeit der Ortsbestimmung noch nicht erreicht ist, kann das Verfahren mit neu festgelegten Abtastpositionen 9 und einer ggf. erhöhten Gesamtintensität des Anregungslichts wiederholt werden.

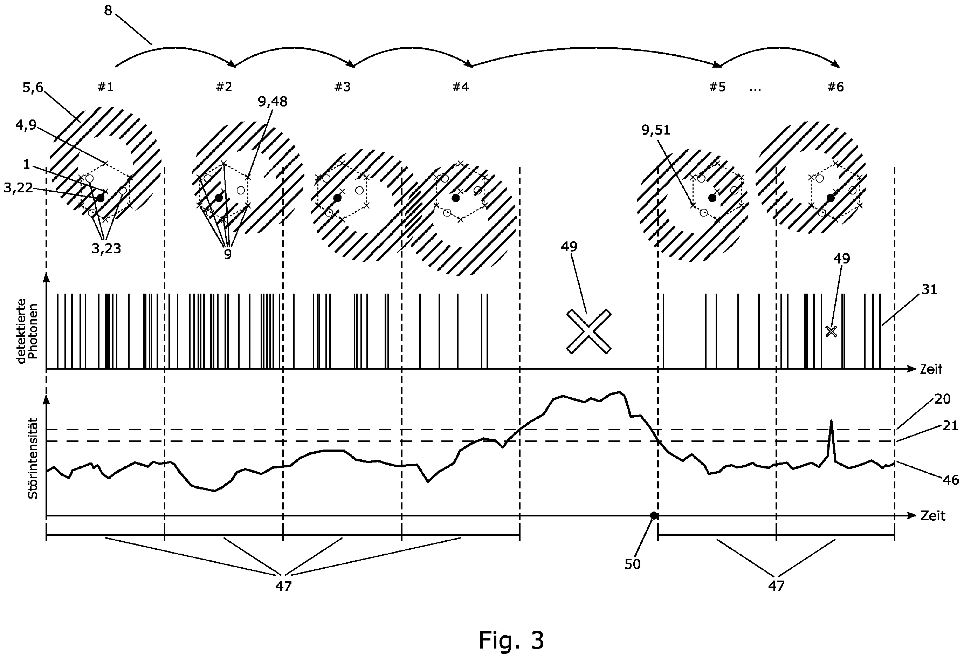

In **Fig. 3** ist der Ablauf der Datenaufnahme bei der in Fig. 2 dargelegten Ausführungsform des erfindungsgemäßen Verfahrens im Detail illustriert (simulierte Daten). In der Probe 2 liegt eine mit Fluoreszenzfarbstoffmolekülen 3 angefärbte Struktur vor, wobei der abzutastende Bereich nur ein einzelnes Farbstoffmolekül 3 im fluoreszenten Zustand 22 aufweist, während benachbarte Farbstoffmoleküle 3 in einem Dunkelzustand 23 vorliegen. Um den angenommenen Ort 1 des fluoreszenten Moleküls 3, 22 herum ist eine Abfolge 8 von Abtastpositionen 9 festgelegt. Zunächst wird mit Hilfe einer in dieser Figur nicht gezeigten Messeinrichtung 17 die Größe des Störsignals 46 bestimmt und das Störsignal 46 mit einem ersten Grenzwert 20 verglichen. Zu Beginn des ersten Abtastschritts #1 liegt das Störsignal 46 unterhalb des ersten Grenzwerts 20, woraufhin das Beleuchten des Farbstoffmoleküls 3 mit der ein lokales Intensitätsminimum 4 aufweisenden Intensitätsverteilung 5 von Anregungslicht 6 an der ersten Abtastposition 9 begonnen wird und die von dem fluoreszierenden Farbstoffmolekül 3, 22 emittierten Fluoreszenzphotonen für die Dauer des ersten Beleuchtungsintervalls 47 detektiert werden. Die von den Fluoreszenzphotonen hervorgerufenen Zählereignisse 31 werden für das erste Beleuchtungsintervall 47 aufsummiert und der ersten Abtastposition 9 zugeordnet. Zu Beginn des zweiten Abtastschritts #2 liegt das Störsignal 46 weiterhin unterhalb des ersten Grenzwerts 20, woraufhin das Intensitätsminimum 4 der Intensitätsverteilung 5 an der zweiten Abtastposition 48 positioniert und die von dem fluoreszierenden Farbstoffmolekül 3, 22 emittierten Fluoreszenzphotonen für die Dauer des zweiten Beleuchtungsintervalls 47 detektiert werden. Die Zählereignisse 31 werden aufsummiert und der zweiten Abtastposition 48 zugeordnet. Der Vorgang wird bis einschließlich des vierten Abtastschritts #4 fortgesetzt. Nach Ende des Abtastschritts #4 liegt das Störsignal 46 oberhalb des ersten Grenzwerts 20, und der Beleuchtungsvorgang wird temporär unterbrochen. Die Unterbrechung 49 wird bis zu dem Zeitpunkt 50 aufrechterhalten, bis das Störsignal 46 den zweiten Grenzwert 21 wieder unterschritten hat. Erst danach wird das Intensitätsminimum 4 der Intensitätsverteilung 5 an der fünften Abtastposition 51 positioniert und die von dem fluoreszierenden Farbstoffmolekül 3,22 emittierten Fluoreszenzphotonen für die Dauer des fünften Beleuchtungsintervalls 47 detektiert. Die aufsummierten Zählereignisse 31 werden der fünften Abtastposition 51 zugeordnet. Zu Beginn der nachfolgenden Abtastschritte liegt das Störsignal 46 weiterhin unterhalb des ersten Grenzwerts 20, weswegen das Beleuchten und Detektieren des Fluoreszenzlichts wie beschrieben fortgesetzt wird. Im Verlauf des Beleuchtens des fluoreszenten Moleküls 3, 22 an der sechsten Abtastposition tritt eine weitere kurzzeitige Überschreitung des ersten Grenzwerts 20 der Störung auf, weswegen das Beleuchten und Detektieren der Fluoreszenzphotonen ein weiteres Mal kurzzeitig unterbrochen wird. Das Beleuchtungsintervall kann um die Dauer dieser Unterbrechung 49 verlängert werden, um gleich lange Detektionsintervalle sicherzustellen.

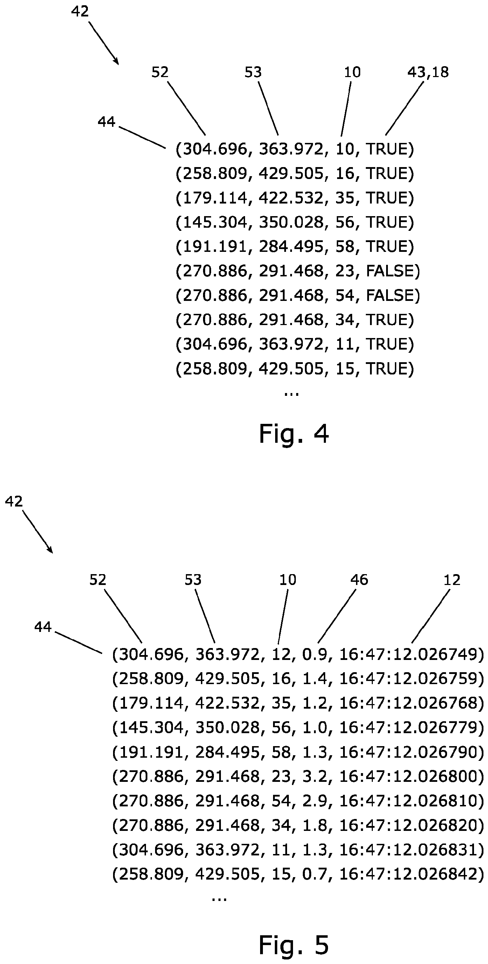

Fig. 4 zeigt ein mögliches Datenformat 42 zur Speicherung der Daten. Für jede der Abtastpositionen 9 des lokalen Intensitätsminimums 4 enthält der Datensatz einen Eintrag in Form eines Tupels 44 umfassend die x-Koordinate 52 und die y-Koordinate 53 des Intensitätsminimums 4, die Anzahl 10 detektierter Fluoreszenzphotonen und eine Kennung 43 in Form eines booleschen Wahrheitswerts 18. Dabei zeigen TRUE-Werte an, dass die Störungen während der Fluoreszenzdetektion des jeweiligen Abtastpunkts unterhalb eines Grenzwerts lagen, und FALSE-Werte, dass die Störungen zumindest während eines Zeitpunkts 50 während der Fluoreszenzdetektion des jeweiligen Abtastpunkts oberhalb eines Grenzwertes lagen. Das Datenformat 42 kann leicht um eine z-Koordinate ergänzt werden (nicht gezeigt), wenn die Koordinaten in drei Dimensionen verfügbar sind. Dieses Datenformat 42 ist insbesondere geeignet, wenn die Störungen mit einem Sensor 32 erfasst werden, dessen Ausgabe lediglich die Überschreitung eines Grenzwerts in digitaler Form, nicht aber die Größe der Störsignals 46 in quantitativer Form anzeigt.

**Fig. 5** zeigt ein weiteres mögliches Datenformat 42 zur Speicherung der Daten. Abweichend von dem in Fig. 4 dargestellten Datenformat 42 wird hier nicht nur ein boolescher Wahrheitswert 18 gespeichert, der eine Überschreitung des Grenzwerts der Störung anzeigt, sondern die Störung wird als quantitativer Wert des Störsignals 46 mitgespeichert. Weiterhin ist jedem Tupel 44 ein Zeitstempel 12 zugeordnet, der den Zeitpunkt der Datenaufnahme des jeweiligen Tupels 44 wiedergibt. Dieses Datenformat 42 ist vorteilhaft, wenn die Störung quantitativ in Echtzeit erfasst werden kann, so dass die Festlegung des Grenzwerts nicht a priori erfolgen muss, sondern auch erst im Rahmen einer nachfolgenden, separaten Datenauswertung erfolgen kann. Dies erlaubt auch eine vergleichende Analyse der Daten mit unterschiedlicher Grenzwertsetzung. Das Datenformat ist weiterhin geeignet, die Ortsbestimmung des Fluoreszenzfarbstoffmoleküls 3 unter Berücksichtigung eines weiteren, mit einem Sensor 32 erfassten und separat, ebenfalls mit einem Zeitstempel gespeicherten Störsignal 46 vorzunehmen.

**Fig. 6** zeigt beispielhaft und schematisch den Aufbau eines Laserscanningmikroskops 24 zur Durchführung des erfindungsgemäßen Verfahrens mit zwei bei unterschiedlichen Emissionswellenlängen emittierenden Fluoreszenzfarbstoffen. Zwei Laserlichtquellen 54 stellen Anregungslicht 6 unterschiedlicher Wellenlängen 55 und 56 zur Verfügung, das mit einem Strahlkoppler 58 zu einem gemeinsamen Anregungslichtstrahl 41 vereinigt wird. Der Anregungslichtstrahl 41 durchtritt nun eine Strahlablenkungseinrichtung 66, hier ausgeführt in

Form zweier nacheinander geschalteter elektrooptischer Deflektoren (EOD) 59 zur Ablenkung des Anregungslichtstrahls 41 in der horizontalen bzw. vertikalen Richtung. Nach Durchlaufen der EODs 59 werden die beiden Anregungswellenlängen 55, 56 noch einmal mit einem Strahlteiler 60 aufgetrennt, und ihre Wellenfronten werden mit zwei separaten Phasenmodulationselementen 26, hier in Form zweier Flüssigkristallmodulatoren 61 (*Spatial Light Modulator,* SLM) so geformt, dass bei der nachfolgenden Fokussierung durch das Mikroskopobjektiv 28 eine ein lokales Intensitätsminimum 4 aufweisende Intensitätsverteilung 5 des Anregungslichts 6 in der Probe 2 resultiert. Die von den Flüssigkristallmodulatoren 61 reflektierten Lichtstrahlen werden mit Strahleinkopplern 62 in einen Hauptstrahlengang 63 des Laserscanningmikroskops 24 eingekoppelt. Die Strahleinkoppler 62 sind vorteilhaft als schmalbandig reflektierende dielektrische Notchfilter 64 ausgeführt, deren Reflexionsbereich möglichst wenig mit dem Emissionsspektrum der Fluoreszenzfarbstoffe überlappt, so dass nur geringe Anteile des im Hauptstrahlengang 63 in Gegenrichtung zum Anregungslicht 6 verlaufenden Fluoreszenzlichts 7 aus dem Hauptstrahlengang 63 ausgespiegelt werden. Das Anregungslicht 6 wird mit einer Scanlinse 65, einem hier beispielhaft in einer Quad-Konfiguration für nur eine Scanrichtung gezeigten Scanner 67 sowie einer Tubuslinse 68 in die rückwärtige Apertur des Objektivs 28 gelenkt. Ein weiterer, zusammen mit dem Anregungslicht in den Hauptstrahlengang 63 eingekoppelter Lichtstrahl zur Fotoaktivierung von Fluoreszenzfarbstoffmolekülen 3 in den fluoreszenten Zustand 22 ist der Einfachheit halber in der Abbildung nicht gezeigt. In der gezeigten Konfiguration dient der Scanner 67 einer vergleichsweise langsamen, aber über ein großes Bildfeld möglichen Grobpositionierung des fokussierten Anregungslichts 6 auf ein im fluoreszenten Zustand 22 befindliches Fluoreszenzfarbstoffmolekül 3 in der Probe 2, während die EODs 59 der schnellen Positionierung des Intensitätsminimums 4 an mehreren dicht um den angenommenen Ort 1 des Farbstoffmoleküls angeordneten Abtastpositionen 9 dienende Strahlablenkeinrichtung 66 ausbilden. Dabei erlauben die EODs 59 eine Positionierung mit hoher Geschwindigkeit, allerdings mit einem auf wenige Mikrometer beschränkten Positionierbereich. Alternativ könnte die Strahlablenkeinrichtung 66 beispielsweise auch durch ein Faserbündel mit Lichtaustrittsenden einzelner Fasern ausgebildet sein, die derart im Strahlengang positioniert sind, dass die einzelnen Lichtaustrittsenden jeweils unterschiedlichen der Abtastpositionen 9 zugeordnet sind, wobei zusätzlich eine Umschalteinrichtung vorgesehen ist, die bewirkt, dass einzelnen Fasern des Bündels zeitlich sequenziell Licht führen. Möglich sind auch andere Ausgestaltungen der Strahlablenkeinrichtung 66; entscheidend ist lediglich, dass die Strahlablenkeinrichtung 66 eingerichtet ist, dass benachbarte Abtastpositionen 9 sequenziell mit Anregungslicht beaufschlagbar sind. Alternativ kann eine Vorrichtung vorhanden sein, die den Scanner 67 und die Strahlablenkeinrichtung 66 integriert; eine solche Vorrichtung kann beispielsweise mit einem sogenannten deformierbaren Spiegel ausgebildet sein. In weiteren alternativen Ausführungsformen könnte die Funktion des Scanners 67 beispielsweise von einem verfahrbaren Probentisch übernommen werden. Das von dem Objektiv 28 aus der Probe 2 empfangene Fluoreszenzlicht 7 propagiert entlang des Hauptstrahlengangs 63 in dem Anregungslicht 6 entgegengesetzter Richtung, wobei es von den Strahleinkopplern 62 transmittiert wird. Das Fluoreszenzlicht 7 wird mit einer Linse 69 durch eine konfokale Lochblende 70 fokussiert, mit einer weiteren Linse 69 kollimiert und mit einem dichroitischen Strahlteiler 71 in zwei Wellenlängenbereiche, die den Emissionsbereich des einen bzw. des anderen Fluoreszenzfarbstoffs umfassen, aufgespalten. Das Fluoreszenzlicht 7 wird jeweils mit einem Bandpassfilter 72 von Streulicht getrennt und mit zwei Detektoren 30 detektiert. Die optischen Komponenten des Laserscanningmikroskops 24 sind über einen gemeinsamen mechanischen Träger 73, beispielsweise eine optische Montageplatte 74, verbunden. Erfindungsgemäß ist an den mechanischen Träger 73 eine Messeinrichtung 17 mit einem Sensor 32 für eine Störung angekoppelt, der hier als Erschütterungssensor 75 ausgeführt ist und der Messung von über den gemeinsamen Träger 73 oder über Luftbewegungen auf das Messsystem eingekoppelten Vibrationen dient. Das Laserscanningmikroskop 24 verfügt über eine Steuereinheit 76 mit einer Ablaufsteuerung zur Ausführung des in Fig. 1 oder des in Fig. 2 dargestellten Verfahrens und Funktionseinheiten zur Steuerung der Laserlichtquellen 54, des Scanners 67 und der EODs 59 sowie zur Verarbeitung der von den Detektoren 30 detektierten Fluoreszenzlichtsignale und deren Speicherung in einem Datenspeicher 45, beispielsweise in einem der in Fig. 4 oder Fig. 5 dargestellten Datenformate 42. Die Steuereinheit 76 kann dabei weitere Funktionen, insbesondere Analyse- und Visualisierungsfunktionen beinhalten. Die Funktionseinheiten können integriert oder auch als separate Einheiten ausgeführt sein. Zur Ausführung des erfindungsgemäßen Verfahrens verfügt die Steuereinheit 76 über einen Signaleingang 77 für die von dem Sensor 32 registrierte Störung. Die Ablaufsteuerung ist so konfiguriert, dass sie bei jeder Messung einer Fluoreszenzintensität auch den aktuellen Messwert des Sensors 32 erfasst und zusammen mit der Anzahl der detektierten Fluoreszenzphotonen sowie der aktuellen Position des Intensitätsminimums 4 der Intensitätsverteilung 5 speichert. Sofern der Sensor 32 nur die Überschreitung eines Grenzwerts in digitaler Form anzeigt, speichert die Ablaufsteuerung mit der Fluoreszenzintensität eine die Überschreitung des Grenzwertes anzeigende Kennung. Alternativ ist die Ablaufsteuerung so konfiguriert, dass sie die Messung bei Überschreiten eines ersten Grenzwerts 20 des Störsignals aussetzt, bis das Störsignal wieder unterhalb des ersten Grenzwerts oder eines zweiten Grenzwerts 21 liegt.

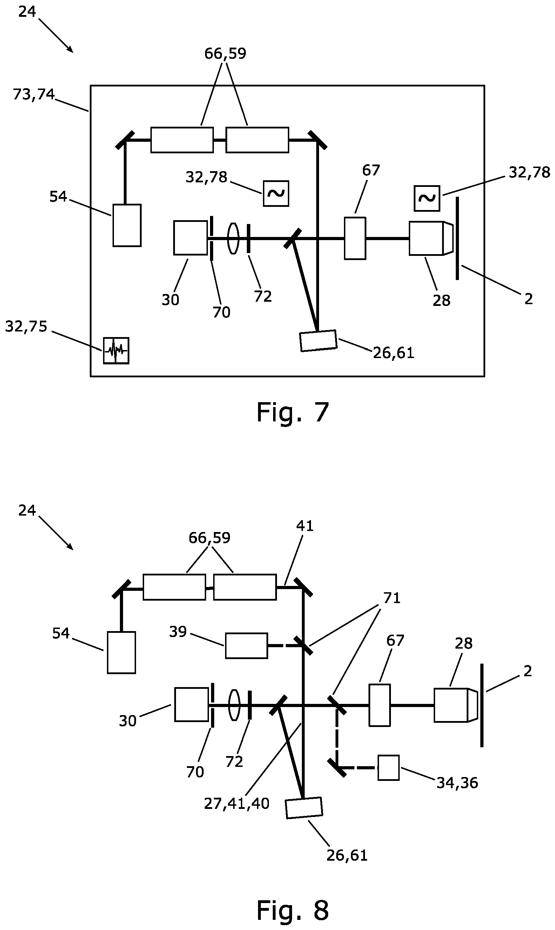

Das in **Fig. 7** gezeigte erfindungsgemäße Laserscanningmikroskop 24 entspricht in seinem Aufbau dem in Fig. 6 gezeigten Laserscanningmikroskop 24, jedoch ist es hier mit nur einer Laserlichtquelle 54 zur Bereitstellung von Anregungslicht 6 einer Wellenlänge 55 und nur einem Detektor 30 zur Detektion von Fluoreszenzlicht 7 ausgestattet. Entsprechend sind auch die Strahlteiler 58, 60, 71 und Strahleinkoppler 62 zur Vereinigung bzw. zur Trennung des Anregungslichts 6 unterschiedlicher Wellenlängen 55, 56 und zur Trennung des Fluoreszenzlichts 7 unterschiedlicher Wellenlängen entfallen. Abweichend von Fig. 6 ist das hier gezeigte Laserscanningmikroskop mit mehreren, an verschiedenen Stellen positionierten Sensoren 32 ausgestattet, wobei ein Sensor 32 als Erschütterungssensor 75 und zwei weitere Sensoren 32 als Strömungssensoren 78 ausgeführt sind. Der Erschütterungssensor 75 ist mechanisch mit der Montageplatte 74 verbunden. Die Strömungssensoren 78 sind an besonders empfindlichen bzw. besonders exponierten Stellen des Laserscanningmikroskops 24, beispielsweise in der Nähe des Objektivs 28 oder in der Nähe offener Strahlwege, positioniert.

Das in **Fig. 8** gezeigte erfindungsgemäße Laserscanningmikroskop 24 entspricht in seinem Aufbau dem in Fig. 7 gezeigten Laserscanningmikroskop 24, jedoch ist die Messeinrichtung 17 zur Erfassung einer Störung durch eine Hilfslichtquelle 39, beispielsweise einen im infraroten Spektralbereich emittierenden Laser, und einen Lichtdetektor 34 in Form eines segmentierten Detektors 36 ausgebildet. Dabei wird der von der Hilfslichtquelle 39 emittierte Messlichtstrahl 40 mit Hilfe zweier dichroitischer Strahlteiler 71 in den Strahlengang 27 ein- und an anderer Stelle wieder ausgekoppelt, so dass der Messlichtstrahl 40 teilweise im Strahlengang 27 des Anregungslichts 41 verläuft. Etwaige Störungen, die auf die strahlführenden Elemente 79 des Anregungslichts 6 übertragen werden und zu einer Veränderung der Lage des fokussierten Anregungslichts 6 in der Probe 2 führen, werden so auch auf den Messlichtstrahl 40 übertragen und können durch Änderung der Lage des Messlichtstrahls 40 auf dem segmentierten Detektor 36 erfasst werden.

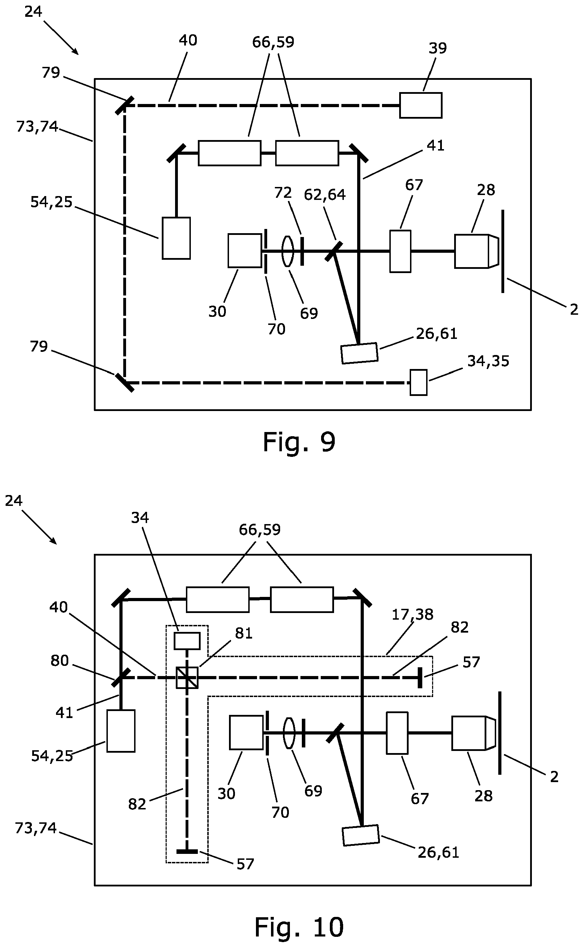

Das in **Fig. 9** gezeigte erfindungsgemäße Laserscanningmikroskop 24 entspricht in seinem Aufbau dem in Fig. 8 gezeigten Laserscanningmikroskop 24, jedoch verläuft der Messlichtstrahl 40 hier nicht teilweise zusammen mit dem Anregungslichtstrahl 41, sondern vollständig getrennt von diesem. Als Lichtdetektor 34 ist hier ein positionssensitiver Detektor 35, beispielsweise eine positionsempfindliche großflächige, analoge Fotodiode oder eine Quadrantendiode, vorgesehen. Störungen, die über den gemeinsamen mechanischen Träger 73 auf die Elemente des Laserscanningmikroskops 24 übertragen werden, gelangen über die strahlführenden Elemente 79 des Messlichtstrahls 40 sowie die Halterung der Hilfslichtquelle 39 auch auf den Messlichtstrahl 40 und führen zu einer Lageänderung des Messlichtstrahls 40 auf dem positionssensitiven Detektor 35. Auch wird der Messlichtstrahl 40 ebenso wie der Anregungslichtstrahl 41 durch akustische Störungen oder durch Luftströmungen beeinflusst und kann diese daher erfassen.

Das in **Fig. 10** gezeigte erfindungsgemäße Laserscanningmikroskop 24 entspricht in seinem Aufbau dem in Fig. 8 gezeigten Laserscanningmikroskop 24, jedoch wird der Messlichtstrahl 40 hier nicht von einer Hilfslichtquelle 39 bereitgestellt, sondern aus dem Anregungsstrahl 41 mit einem Strahlteiler 80 ausgekoppelt. Die Messeinrichtung 17 zur Messung der Störung ist hier als (Michelson-)Interferometer 38 mit einem Strahlteilerwürfel 81 und zwei Spiegeln 57 zur Rückreflexion der beiden Teilstrahlen 82 ausgebildet; andere Interferometer-Typen sind ebenso einsetzbar, insbesondere Mach-Zehnder-Interferometer. Die Arme des Interferometers 38 sind räumlich dicht an den Strahlengängen des Anregungslichts 6 und des Fluoreszenzlichts 7 angeordnet, und die Spiegel 57 des Interferometers 38 sind auf dem gleichen mechanischen Träger 73 montiert wie die übrigen Komponenten des Laserscanningmikroskops 24. Alternativ ist auch eine Montage des oder der Spiegel 57 an einer der übrigen Komponenten des Laserscanningmikroskops 24 möglich. Hinter dem Austrittsport des Interferometers 38 ist der Lichtdetektor 34 platziert, beispielsweise eine Fotodiode oder ein Fotomultiplier. Naturgemäß reagiert das Interferometer 38 sehr empfindlich auf Erschütterungen, auf (turbulente) Luftströmungen und Schall und übersetzt diese Störungen in Helligkeitsschwankungen auf dem Lichtdetektor 34. Zur weiteren Steigerung der Empfindlichkeit kann das Interferogramm auch mit einem räumlich auflösenden Detektor, speziell einer Kamera, aufgenommen und das Interferenzmuster mit einer Bildverarbeitung auf Änderungen untersucht werden.

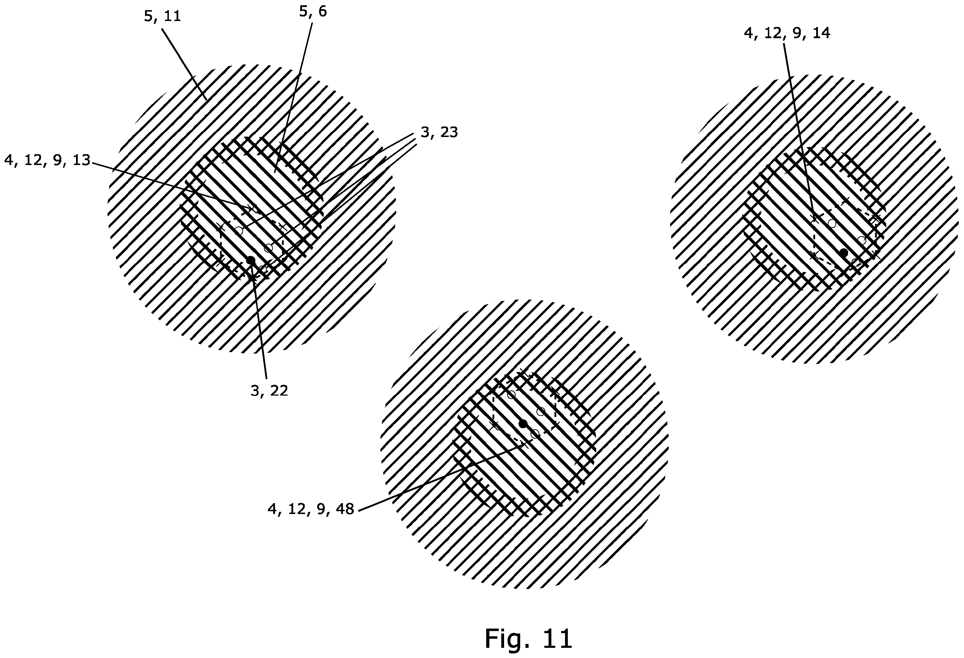

In **Fig. 11** sind drei Abtastpositionen 9 aus der Abfolge 8 einer erfindungsgemäßen Verfahrensvariante gezeigt, bei der das Fluoreszenzfarbstoffmolekül 3 im fluoreszenten Zustand 22 mit einer ein lokales Intensitätsmaximum 12 aufweisenden Intensitätsverteilung 5 des Anregungslichts 6 und einer ein lokales Intensitätsminimum 4 aufweisenden Intensitätsverteilung 5 von Fluoreszenzverhinderungslicht 11 beleuchtet wird. Die Abtastpositionen 9 sind wie in Fig. 3 auf den Ecken eines regelmäßigen Sechsecks angeordnet, allerdings erfolgt die Beleuchtung des Fluoreszenzfarbstoffmoleküls 3 an der 1. Abtastposition 13, der 2. Abtastposition 48 und der 3. Abtastposition hier nicht entlang einer Umlaufrichtung des Sechsecks, sondern in einer beliebigen Reihenfolge.

### Bezugszeichenliste

- 1: Ort
- 2: Probe
- 3: Fluoreszenzfarbstoffmolekül
- 4: lokales Intensitätsminimum
- 5: Intensitätsverteilung
- 6: Anregungslicht
- 7: Fluoreszenzlicht
- 8: Abfolge
- 9: Abtastposition
- 10: Anzahl
- 11: Fluoreszenzverhinderungslicht
- 12: lokales Intensitätsmaximum
- 13: 1. Abtastposition
- 14: 3. Abtastposition
- 17: Messeinrichtung
- 18: Wahrheitswert
- 20: erster Grenzwert
- 21: zweiter Grenzwert
- 22: fluoreszenter Zustand
- 23: Dunkelzustand
- 24: Laserscanningmikroskop
- 25: Anregungslichtquelle
- 26: Phasenmodulationselement
- 27: Strahlengang
- 28: Objektiv
- 30: Detektor
- 31: Zählereignisse
- 32: Sensor
- 34: Lichtdetektor
- 35: positionssensitiver Detektor
- 36: segmentierter Detektor
- 38: Interferometer
- 39: Hilfslichtquelle
- 40: Messlichtstrahl
- 41: Anregungslichtstrahl
- 42: Datenformat
- 43: Kennung
- 44: Tupel
- 45: Datenspeicher
- 46: Störsignal
- 47: Beleuchtungsintervall
- 48: 2. Abtastposition
- 49: Unterbrechung
- 50: Zeitpunkt
- 51: 5. Abtastposition
- 52: x-Koordinate
- 53: y-Koordinate
- 54: Laserlichtquelle
- 55: Wellenlänge
- 56: Wellenlänge
- 57: Spiegel
- 58: Strahlkoppler
- 59: elektrooptischer Deflektor (EOD)
- 60: Strahlteiler
- 61: Flüssigkristallmodulatoren
- 62: Strahleinkoppler
- 63: Hauptstrahlengang
- 64: Notchfilter
- 65: Scanlinse
- 66: Strahlablenkeinrichtung
- 67: Scanner
- 68: Tubuslinse
- 69: Linse
- 70: Lochblende
- 71: dichroitischer Strahlteiler
- 72: Bandpassfilter
- 73: mechanischer Träger
- 74: Montageplatte
- 75: Erschütterungssensor
- 76: Steuereinheit
- 77: Signaleingang
- 78: Strömungssensor
- 79: strahlführendes Element
- 80: Strahlteiler
- 81: Strahlteilerwürfel
- 82: Teilstrahl

## Patentansprüche

1. Verfahren zur Bestimmung von Orten einzelner an eine Struktur in einer Probe (2) gekoppelter Fluoreszenzfarbstoffmoleküle umfassend die Verfahrensschritte
- sequenzielles Beleuchten eines einzelnen, räumlich isolierten Fluoreszenzfarbstoffmoleküls (3) mit einer ein lokales Intensitätsminimum (4) aufweisenden Intensitätsverteilung (5) eines Anregungslichts (6) oder mit einer Intensitätsverteilung (5) eines Anregungslichts (6) und einer zur Intensitätsverteilung (5) des Anregungslichts (6) im Wesentlichen komplementären, ein lokales Intensitätsminimum (4) aufweisenden Intensitätsverteilung (5) eines Fluoreszenzverhinderungslichts (11) an einer Abfolge (8) von unterschiedlichen Abtastpositionen (9) des lokalen Intensitätsminimums (4) zur Anregung des Fluoreszenzfarbstoffmoleküls (3) zur Abgabe von Fluoreszenzlicht (7);
- Detektieren der Anzahl (10) von Fluoreszenzphotonen des Fluoreszenzlichts (7) und Zuordnen der Anzahl (10) der Fluoreszenzphotonen zu der jeweiligen Abtastposition (9) bei jedem Schritt der Abfolge (8);
- Bestimmen des Orts (1) des Fluoreszenzfarbstoffmoleküls (3) aus der Menge von einander zugeordneten Anzahlen (10) von Fluoreszenzphotonen und Abtastpositionen (9) mit einer Genauigkeit unterhalb einer Abmessung eines beugungsbegrenzten Volumens in einer Raumrichtung;
**dadurch gekennzeichnet, dass** während des Beleuchtens der Probe die Größe einer Störung bestimmt wird und dass jedem Element der Menge von einander zugeordneten Anzahlen (10) von Fluoreszenzphotonen und Abtastpositionen (9) ein Gewichtungsfaktor zugeordnet wird, dessen Wert sich aus der Größe der Störung während des Detektierens der Fluoreszenzphotonen an der jeweiligen Abtastposition (9) bestimmt, und dass bei der Bestimmung des Orts (1) des Fluoreszenzfarbstoffmoleküls (3) die Elemente der Menge von einander zugeordneten Anzahlen (10) von Fluoreszenzphotonen und Abtastpositionen (9) entsprechend ihrem Gewichtungsfaktor berücksichtigt werden.

2. Verfahren nach Anspruch 1, **dadurch gekennzeichnet, dass** die das lokale Intensitätsminimum (4) aufweisende Intensitätsverteilung (5) bis auf eine Translation für alle Abtastpositionen (9) gleich ist.

3. Verfahren nach Anspruch 1 oder 2, **dadurch gekennzeichnet, dass** die Größe der Störung als Funktion der Zeit gespeichert wird.

4. Verfahren nach Anspruch 1 oder 2, **dadurch gekennzeichnet, dass** dem Gewichtungsfaktor der Wert null zugewiesen wird, wenn während des Detektierens der Fluoreszenzphotonen die Größe der Störung einen Grenzwert erreicht oder überschritten hat.

5. Verfahren nach einem der Ansprüche 1 bis 4, **dadurch gekennzeichnet, dass** den Gewichtungsfaktoren diskrete Werte zugeordnet werden, insbesondere wobei die diskreten Werte binäre Werte sind, die das Vorhandensein bzw. Nichtvorhandensein oder das Überschreiten eines Grenzwerts der Störung kennzeichnen.

6. Verfahren zur Bestimmung von Orten einzelner an eine Struktur in einer Probe (2) gekoppelter Fluoreszenzfarbstoffmoleküle umfassend die Verfahrensschritte
- sequenzielles Beleuchten eines einzelnen, räumlich isolierten Fluoreszenzfarbstoffmoleküls (3) mit einer ein lokales Intensitätsminimum (4) aufweisenden Intensitätsverteilung (5) eines Anregungslichts (6) oder mit einer Intensitätsverteilung (5) eines Anregungslichts (6) und einer zur Intensitätsverteilung (5) des Anregungslichts (6) im Wesentlichen komplementären, ein lokales Intensitätsminimum (4) aufweisenden Intensitätsverteilung (5) eines Fluoreszenzverhinderungslichts (11) an einer Abfolge (8) von unterschiedlichen Abtastpositionen (9) des lokalen Intensitätsminimums (4) zur Anregung des Fluoreszenzfarbstoffmoleküls (3) zur Abgabe von Fluoreszenzlicht (7);
- Detektieren der Anzahl (10) von Fluoreszenzphotonen des Fluoreszenzlichts (7) und Zuordnen der Anzahl (10) der Fluoreszenzphotonen zu der jeweiligen Abtastposition (9) bei jedem Schritt der Abfolge (8);
- Bestimmen des Orts (1) des Fluoreszenzfarbstoffmoleküls aus der Menge von einander zugeordneten Anzahlen (10) von Fluoreszenzphotonen und Abtastpositionen (9) mit einer Genauigkeit unterhalb einer Abmessung eines beugungsbegrenzten Volumens in einer Raumrichtung;
**dadurch gekennzeichnet, dass** während des Beleuchtens der Probe die Größe einer Störung bestimmt wird und dass das Beleuchten des Farbstoffmoleküls (3) an der Abfolge von Abtastpositionen (9) und das Detektieren der Fluoreszenzphotonen unterbrochen wird, wenn die Größe der Störung einen ersten Grenzwert (20) überschreitet.

7. Verfahren nach Anspruch 6, **dadurch gekennzeichnet, dass** das Beleuchten des Farbstoffmoleküls (3) an der Abfolge von Abtastpositionen (9) fortgesetzt wird, wenn die Größe der Störung einen zweiten Grenzwert (21) unterschreitet, wobei der zweite Grenzwert (21) identisch mit dem ersten Grenzwert (20) oder kleiner als der erste Grenzwert (20) ist.

8. Verfahren nach Anspruch 7, **dadurch gekennzeichnet, dass** der zweite Grenzwert (21) kleiner ist als der erste Grenzwert (20).

9. Verfahren nach einem der Ansprüche 1 bis 8, **dadurch gekennzeichnet, dass**
- die Störung mit einem Erschütterungssensor (75), einem Beschleunigungssensor, einem optischen, kapazitiven oder induktiven Abstandssensor, einem Positionssensor, einem Mikrofon, einem Drucksensor, einem Strömungssensor (78), einem Temperatursensor oder mit einer Kombination verschiedener solcher Sensoren erfasst wird, oder
- die Störung erfasst wird, indem aus einem Strahlengang (27) des Anregungslichts (6) ein geringer Teil des Anregungslichts (6) ausgekoppelt und auf einen Lichtdetektor (34) gerichtet wird, oder
- die Störung mit Hilfe eines Messlichtstrahls (40) und eines Lichtdetektors (34) erfasst wird.

10. Verfahren nach Anspruch 9, **dadurch gekennzeichnet, dass** der Lichtdetektor (34) als positionssensitiver Detektor (35) und/oder als segmentierter Detektor (36) ausgebildet ist.

11. Verfahren nach Anspruch 9 oder 10, **dadurch gekennzeichnet, dass** vor dem Lichtdetektor (34) ein Interferometer (38) angeordnet ist.

12. Verfahren nach einem der Ansprüche 1 bis 11, **dadurch gekennzeichnet, dass** der Ort (1) des Fluoreszenzfarbstoffmoleküls (3) wiederholt bestimmt wird, insbesondere wobei aus den Orten (1) des Fluoreszenzfarbstoffmoleküls (3) eine Trajektorie des Fluoreszenzfarbstoffmoleküls (3) in der Probe (2) generiert wird.

13. Verfahren nach einem der Ansprüche 1 bis 12, **dadurch gekennzeichnet, dass** mit dem Verfahren die Orte (1) mehrerer unterschiedlicher Farbstoffmoleküle (3) bestimmt werden, insbesondere wobei aus den Orten (1) der Farbstoffmoleküle (3) ein hochaufgelöstes Bild der Struktur in der Probe (2) generiert wird.

14. Laserscanningmikroskop (24) mit
- einer Laserlichtquelle (54) zur Bereitstellung von Anregungslicht (6);
- einem Phasenmodulationselement (26) in einem Strahlengang (27) des Anregungslichts (6);
- einem Objektiv (28), das das Anregungslicht (6) in eine Probe (2) fokussiert und Fluoreszenzlicht (7) aus der Probe (2) empfängt;
- einer Strahlablenkeinrichtung (66);
- einem Detektor (30) für aus der Probe empfangenes Fluoreszenzlicht (7);
**dadurch gekennzeichnet, dass** das Laserscanningmikroskop (24) eine Messeinrichtung (17) zur Erfassung einer Störung aufweist oder mit einer solchen Messeinrichtung (17) synchronisiert betreibbar ist und dass es dazu ausgebildet ist, das Verfahren nach einem der Ansprüche 1 bis 13 auszuführen.

15. Laserscanningmikroskop (24) mit
- einer Laserlichtquelle (54) zur Bereitstellung von Anregungslicht (6);
- einer Laserlichtquelle (54) zur Bereitstellung von Fluoreszenzverhinderungslicht (11);
- einem Phasenmodulationselement (26) in einem Strahlengang (27) des Fluoreszenzverhinderungslichts (11);
- einem Objektiv (28), das das Anregungslicht (6) und das Fluoreszenzverhinderungslicht (11) in eine Probe (2) fokussiert und Fluoreszenzlicht (7) aus der Probe (2) empfängt;
- einer Strahlablenkeinrichtung (66);
**dadurch gekennzeichnet, dass** das Laserscanningmikroskop (24) eine Messeinrichtung (17) zur Erfassung einer Störung aufweist oder mit einer solchen Messeinrichtung (17) synchronisiert betreibbar ist und dass es dazu ausgebildet ist, das Verfahren nach einem der Ansprüche 1 bis 13 auszuführen.

## Claims

1. A method for determining locations of individual fluorescent dye molecules coupled to a structure in a sample (2) comprising the method steps of
- sequential illumination of an individual, spatially isolated fluorescent dye molecule (3) by an intensity distribution (5) of an excitation light (6) comprising a local intensity minimum (4) or by an intensity distribution (5) of an excitation light (6) and an intensity distribution (5) of a fluorescence-preventing light (11) comprising a local intensity minimum (4) and substantially complementary to the intensity distribution (5) of the excitation light (6) at a sequence (8) of different scan positions (9) of the local intensity minimum (4) for exciting the fluorescent dye molecule (3) to emit fluorescence light (7);
- detecting the number (10) of fluorescence photons of the fluorescence light (7) and assigning the number (10) of fluorescence photons to the respective scan position (9) at each step of the sequence (8);
- determining the location (1) of the fluorescent dye molecule (3) from the set of associated numbers (10) of fluorescence photons and scan positions (9) with an accuracy below a dimension of a diffraction-limited volume in a spatial direction;
**characterized in that** during the illumination of the sample the magnitude of a disturbance is determined and that a weighting factor is assigned to each element of the set of associated numbers (10) of fluorescence photons and scan positions (9), the value of which is determined from the magnitude of the disturbance during the detection of the fluorescence photons at the respective scan position (9), and **in that** the elements of the set of assigned numbers (10) of fluorescence photons and scan positions (9) are taken into account in accordance with their weighting factor when determining the location (1) of the fluorescent dye molecule (3).

2. The method according to claim 1, **characterized in that** the intensity distribution (5) comprising the local intensity minimum (4) is the same for all scan positions (9) except for a translation.

3. The method according to claim 1 or 2, **characterized in that** the magnitude of the disturbance is stored as a function of time.

4. The method according to claim 1 or 2, **characterized in that** the weighting factor is assigned the value zero if during the detection of the fluorescence photons the magnitude of the disturbance has reached or exceeded a threshold value.

5. The method according to one of the claims 1 to 4, **characterized in that** discrete values are assigned to the weighting factors, particularly wherein the discrete values are binary values indicating the presence or absence or exceeding of a limit value of the disturbance.

6. A method for determining locations of individual fluorescent dye molecules coupled to a structure in a sample (2) comprising the steps of
- sequential illumination of an individual, spatially isolated fluorescent dye molecule (3) by an intensity distribution (5) of an excitation light (6) comprising a local intensity minimum (4) or by an intensity distribution (5) of an excitation light (6) and an intensity distribution (5) of a fluorescence-preventing light (11) comprising a local intensity minimum (4) and substantially complementary to the intensity distribution (5) of the excitation light (6) at a sequence (8) of different scan positions (9) of the local intensity minimum (4) for exciting the fluorescent dye molecule (3) to emit fluorescence light (7);
- detecting the number (10) of fluorescence photons of the fluorescence light (7) and assigning the number (10) of fluorescence photons to the respective scan position (9) at each step of the sequence (8);
- determining the location (1) of the fluorescent dye molecule from the set of associated numbers (10) of fluorescence photons and scan positions (9) with an accuracy below a dimension of a diffraction-limited volume in a spatial direction;
**characterized in that** during the illumination of the sample (2) the magnitude of a disturbance is determined, and **in that** the illumination of the dye molecule (3) at the sequence (8) of scan positions (9) and the detection of the fluorescence photons is interrupted when the magnitude of the disturbance exceeds a first limit value (20).

7. The method according to claim 6, **characterized in that** the illumination of the dye molecule (3) at the sequence (8) of scan positions (9) is continued when the magnitude of the disturbance falls below a second limit value (21), wherein the second limit value (21) is identical to the first limit value (20) or smaller than the first limit value (20).

8. The method according to claim 7, **characterized in that** the second limit value (21) is smaller than the first limit value (20).

9. The method according to one of the claims 1 to 8, **characterized in that**
- the disturbance is detected with a vibration sensor (75), an acceleration sensor, an optical, capacitive or inductive distance sensor, a position sensor, a microphone, a pressure sensor, a flow sensor (78), a temperature sensor or with a combination of different such sensors, or
- the disturbance is detected by decoupling a small part of the excitation light (6) from a beam path (27) of the excitation light (6) and directing it onto a light detector (34), or
- the disturbance is detected by means of a measuring light beam (40) and a light detector (34).

10. The method according to claim 9, **characterized in that** the light detector (34) is configured as a position-sensitive detector (35) and/or as a segmented detector (36).

11. The method according to claim 9 or 10, **characterized in that** an interferometer (38) is arranged in front of the light detector (34).

12. The method according to one of the claims 1 to 11, **characterized in that** the location (1) of the fluorescent dye molecule (3) is determined repeatedly, particularly wherein a trajectory of the fluorescent dye molecule (3) in the sample (2) is generated from the locations (1) of the fluorescent dye molecule (3).

13. The method according to one of the claims 1 to 12, **characterized in that** the locations (1) of several different dye molecules (3) are determined by the method, particularly wherein a high-resolution image of the structure in the sample (2) is generated from the locations (1) of the dye molecules (3).

14. A laser scanning microscope (24) comprising
- a laser light source (54) for providing excitation light (6);
- a phase modulation element (26) in a beam path (27) of the excitation light (6);
- an objective (28) configured to focus the excitation light (6) into a sample (2) and to receive fluorescence light (7) from the sample (2);
- a beam deflection device (66);
- a detector (30) for fluorescence light (7) received from the sample (2);
**characterized in that** the laser scanning microscope (24) comprises a measuring device (17) for detecting a disturbance or is operable in synchronization with such a measuring device (17), and **in that** it is configured to carry out the method according to one of the claims 1 to 13.

15. A laser scanning microscope (24) comprising
- a laser light source (54) for providing excitation light (6);
- a laser light source (54) for providing fluorescence-preventing light (11);
- a phase modulation element (26) in a beam path (27) of the fluorescence-preventing light (11);
- an objective (28) configured to focus the excitation light (6) and the fluorescence-preventing light (11) into a sample (2) and to receive fluorescence light (7) from the sample (2);
- a beam deflection device (66);
**characterized in that** the laser scanning microscope (24) comprises a measuring device (17) for detecting a disturbance or is operable in synchronization with such a measuring device (17), and **in that** it is configured to carry out the method according to one of the claims 1 to 13.

## Revendications

1. Procédé pour déterminer les emplacements de molécules de colorant fluorescent individuelles couplées à une structure dans un échantillon (2), comprenant les étapes de procédé suivantes
- illumination séquentielle d'une molécule de colorant fluorescent (3) individuelle, isolée dans l'espace, avec une distribution d'intensité (5) d'une lumière d'excitation (6) présentant un minimum local d'intensité (4) ou avec une distribution d'intensité (5) d'une lumière d'excitation (6) et une distribution d'intensité (5) d'une lumière d'inhibition de fluorescence (11) présentant un minimum local d'intensité (4) sensiblement complémentaire de la distribution d'intensité (5) de la lumière d'excitation (6), à une séquence (8) de différentes positions de balayage (9) du minimum local d'intensité (4) pour exciter la molécule de colorant de fluorescence (3) pour l'émission de lumière fluorescente (7);
- détecter le nombre (10) de photons fluorescents de la lumière fluorescente (7) et associer le nombre (10) de photons fluorescents à la position de balayage (9) respective à chaque étape de la séquence (8) ;
- déterminer l'emplacement (1) de la molécule de colorant fluorescent (3) à partir de l'ensemble de nombres (10) de photons fluorescents et de positions de balayage (9) associés les uns aux autres avec une précision inférieure à une dimension d'un volume limité par diffraction dans une direction spatiale;
**caractérisé en ce que,** pendant l'illumination de l'échantillon, la grandeur d'une perturbation est déterminée et **en ce qu'**un facteur de pondération est attribué à chaque élément de l'ensemble de nombres (10) de photons fluorescents et de positions de balayage (9) associés les uns aux autres, dont la valeur est déterminée à partir de la grandeur de la perturbation pendant la détection des photons de fluorescence à la position de balayage respective (9), et **en ce que**, lors de la détermination de l'emplacement (1) de la molécule de colorant fluorescent (3), les éléments de l'ensemble de nombres (10) de photons de fluorescence et de positions de balayage (9) associés les uns aux autres sont pris en compte conformément à leur facteur de pondération.

2. Procédé selon la revendication 1, **caractérisé en ce que** la distribution d'intensité (5) présentant le minimum local d'intensité (4) est identique, à une translation près, pour toutes les positions de balayage (9).

3. Procédé selon la revendication 1 ou 2, **caractérisé en ce que** la grandeur de la perturbation est mémorisée en fonction du temps.

4. Procédé selon la revendication 1 ou 2, **caractérisé en ce que** la valeur zéro est attribuée au facteur de pondération si, pendant la détection des photons de fluorescence, la grandeur de la perturbation a atteint ou dépassé une valeur limite.

5. Procédé selon l'une des revendications 1 à 4, **caractérisé en ce que** des valeurs discrètes sont attribuées aux facteurs de pondération, en particulier dans lequel les valeurs discrètes sont des valeurs binaires caractérisant la présence ou l'absence ou le dépassement d'une valeur limite de la perturbation.

6. Procédé pour déterminer les emplacements de molécules de colorant fluorescent individuelles couplées à une structure dans un échantillon (2), comprenant les étapes de procédé suivantes
- illumination séquentielle d'une molécule de colorant fluorescent (3) individuelle, isolée dans l'espace, avec une distribution d'intensité (5) d'une lumière d'excitation (6) présentant un minimum local d'intensité (4) ou avec une distribution d'intensité (5) d'une lumière d'excitation (6) et une distribution d'intensité (5) d'une lumière d'inhibition de fluorescence (11) présentant un minimum local d'intensité (4) sensiblement complémentaire de la distribution d'intensité (5) de la lumière d'excitation (6), à une séquence (8) de différentes positions de balayage (9) du minimum local d'intensité (4) pour exciter la molécule de colorant fluorescent (3) pour l'émission de lumière fluorescente (7);
- détecter le nombre (10) de photons fluorescents de la lumière fluorescente (7) et associer le nombre (10) de photons fluorescents à la position de balayage (9) respective à chaque étape de la séquence (8);
- déterminer l'emplacement (1) de la molécule de colorant fluorescent à partir de l'ensemble de nombres (10) de photons fluorescents et de positions de balayage (9) associés les uns aux autres avec une précision inférieure à une dimension d'un volume limité par diffraction dans une direction spatiale;
**caractérisé en ce que,** pendant l'illumination de l'échantillon, la grandeur d'une perturbation est déterminée et **en ce que** l'illumination de la molécule de colorant (3) à la séquence de positions de balayage (9) et la détection des photons de fluorescence sont interrompues lorsque la grandeur de la perturbation dépasse une première valeur limite (20).

7. Procédé selon la revendication 6, **caractérisé en ce que** l'illumination de la molécule de colorant (3) à la séquence de positions de balayage (9) est poursuivie lorsque la grandeur de la perturbation est inférieure à une deuxième valeur limite (21), la deuxième valeur limite (21) étant identique à la première valeur limite (20) ou inférieure à la première valeur limite (20).

8. Procédé selon la revendication 7, **caractérisé en ce que** la deuxième valeur limite (21) est inférieure à la première valeur limite (20).

9. Procédé selon l'une des revendications 1 à 8, **caractérisé en ce que**
- la perturbation est détectée par un capteur de vibrations (75), un capteur d'accélération, un capteur de distance optique, capacitif ou inductif, un capteur de position, un microphone, un capteur de pression, un capteur de flux (78), un capteur
de température ou avec une combinaison de différents capteurs de ce type, ou
- la perturbation est détectée en découplant d'un trajet de faisceau (27) de la lumière d'excitation (6) une faible partie de la lumière d'excitation (6) et en la dirigeant sur un détecteur de lumière (34), ou
- la perturbation est détectée à l'aide d'un faisceau lumineux de mesure (40) et d'un détecteur de lumière (34).

10. Procédé selon la revendication 9, **caractérisé en ce que** le détecteur de lumière (34) est conçu comme un détecteur sensible à la position (35) et/ou comme un détecteur segmenté (36).

11. Procédé selon la revendication 9 ou 10, **caractérisé en ce qu'**un interféromètre (38) est disposé avant le détecteur de lumière (34).

12. Procédé selon l'une des revendications 1 à 11, **caractérisé en ce que** l'emplacement (1) de la molécule de colorant fluorescent (3) est déterminé de manière répétée, en particulier dans lequel une trajectoire de la molécule de colorant fluorescent (3) dans l'échantillon (2) est générée à partir des emplacements (1) de la molécule de colorant fluorescent (3).

13. Procédé selon l'une des revendications 1 à 12, **caractérisé en ce que** les emplacements (1) de plusieurs molécules de colorant (3) différentes sont déterminés par le procédé, en particulier dans lequel une image à haute résolution de la structure dans l'échantillon (2) est générée à partir des emplacements (1) des molécules de colorant (3).

14. Microscope à balayage laser (24) avec
- une source de lumière laser (54) pour fournir une lumière d'excitation (6);
- un élément de modulation de phase (26) dans un trajet de faisceau (27) de la lumière d'excitation (6);
- un objectif (28) qui focalise la lumière d'excitation (6) dans un échantillon (2) et reçoit la lumière de fluorescence (7) de l'échantillon (2);
- un dispositif de déviation du faisceau (66);
- un détecteur (30) de lumière fluorescente (7) reçue de l'échantillon;
**caractérisé en ce que** le microscope à balayage laser (24) comporte un dispositif de mesure (17) pour détecter une perturbation ou peut fonctionner de manière synchronisée avec un tel dispositif de mesure (17) et **en ce qu'**il est conçu pour mettre en oeuvre le procédé selon l'une des revendications 1 à 13.

15. Microscope à balayage laser (24) avec
- une source de lumière laser (54) pour fournir une lumière d'excitation (6);
- une source de lumière laser (54) pour fournir une lumière d'inhibition de fluorescence (11);
- un élément de modulation de phase (26) dans un trajet de faisceau (27) de la lumière d'inhibition de fluorescence (11);
- un objectif (28) qui focalise la lumière d'excitation (6) et la lumière d'inhibition de fluorescence (11) dans un échantillon (2) et reçoit la lumière de fluorescence (7) de l'échantillon (2);
- un dispositif de déviation du faisceau (66);
**caractérisé en ce que** le microscope à balayage laser (24) comporte un dispositif de mesure (17) pour détecter une perturbation ou peut fonctionner de manière synchronisée avec un tel dispositif de mesure (17) et **en ce qu'**il est conçu pour mettre en oeuvre le procédé selon l'une des revendications 1 à 13.
